# EUROPÄISCHE PATENTSCHRIFT

(11) **EP 2 403 668 B1**
(45) Veröffentlichungstag und Bekanntmachung des Hinweises auf die Patenterteilung: **30.01.2019**
(21) Anmeldenummer: 10708712.4
(22) Anmeldetag: 02.03.2010
(51) Int. Cl.: B22D 11/124, B22D 11/22, F01K 17/00, F01K 23/00

(54) **ENERGIERÜCKGEWINNUNG IN WARMBANDSTRASSEN DURCH UMWANDLUNG DER KÜHLWÄRME DER STRANGGIESSANLAGE SOWIE DER RESTWÄRME VON BRAMMEN UND COILS IN ELEKTRISCHE ENERGIE ODER SONSTIGE NUTZUNG DER AUFGEFANGENEN PROZESSWÄRME**
ENERGY RECOVERY IN HOT STRIP MILLS BY CONVERTING THE COOLING HEAT OF THE CONTINUOUS CASTING PLANT AND THE RESIDUAL HEAT OF SLABS AND COILS INTO ELECTRICAL ENERGY OR OTHERWISE UTILIZING THE CAPTURED PROCESS HEAT
RÉCUPÉRATION D'ÉNERGIE DANS DES TRAINS À FEUILLARDS À CHAUD PAR TRANSFORMATION DE LA CHALEUR DE REFROIDISSEMENT DE L'INSTALLATION DE COULÉE CONTINUE ET DE LA CHALEUR RÉSIDUELLE DES BRAMES ET BOBINES EN ÉNERGIE ÉLECTRIQUE OU PAR UNE AUTRE UTILISATION DE LA CHALEUR DU PROCESSUS CAPTÉE

(30) Priorität: 02.03.2009 DE 102009011073; 07.04.2009 DE 102009016384; 27.04.2009 DE 102009018734; 28.04.2009 DE 102009018899; 02.07.2009 DE 102009031557
(43) Veröffentlichungstag der Anmeldung: 11.01.2012
(73) Patentinhaber: SMS group GmbH, 40237 Düsseldorf (DE)
(72) Erfinder: SUDAU, Peter, 57271 Hilchenbach (DE); SEIDEL, Jürgen, 57223 Kreuztal (DE); GÄRTNER, Horst, 41273 Niederkrüchten/ Elmpt (DE); STAVENOW, Axel, 40625 Düsseldorf (DE)
(74) Vertreter: Klüppel, Walter
(86) Internationale Anmeldenummer: PCT/EP2010/001263
(87) Internationale Veröffentlichungsnummer: WO 2010/099920

(56) Entgegenhaltungen:
- EP-A1- 0 038 319
- EP-B1- 0 027 787
- WO-A2-2006/092786
- CN-A- 101 260 816
- CN-Y- 2 499 150
- DE-A1- 2 622 722
- DE-A1- 3 019 714
- DE-A1- 3 432 783
- DE-A1- 4 137 946
- DE-B3- 10 332 270
- JP-A- 5 318 030
- JP-A- 6 257 886
- JP-A- 9 318 172
- JP-A- 11 023 181
- JP-A- 57 060 020
- JP-A- 58 061 318
- JP-A- 58 133 323
- JP-A- 58 215 255
- JP-A- 61 149 796
- JP-A- 2008 096 048
- JP-A- 2008 202 846
- JP-A- 2008 260 022
- US-A- 4 846 259
- US-A1- 2004 154 786
- Hartmut Spliethoff, Andreas Schuster: "The organic Rankine cycle - Power production from low temperature heat.", Electricity generation, combined heat and power Strasbourg , 14. September 2006 (2006-09-14), 16. September 2006 (2006-09-16), Seiten 1-21, XP002629286, Institute for Energy systemsTechische Universität München Gefunden im Internet: URL:http://engine.brgm.fr/web-offlines/con ference-Electricity_generation_from_Enhanc ed_Geothermal_Systems_-_Strasbourg,_France ,_Workshop5/other_contributions/40-slides- 0-Spliethoff.pdf [gefunden am 2011-03-22]

## Beschreibung

Die Erfindung betrifft ein Verfahren und eine Anlage zur Energierückgewinnung in Stranggießanlagen und Warmbandstraßen, insbesondere bei der Erzeugung und Verarbeitung von Brammen zu Bändern bzw. Coils, wobei die bei der Abkühlung des Gießstrangs sowie der Brammen und/oder Coils freiwerdende Wärmeenergie aufgefangen und genutzt wird.

Bei der Abkühlung des Stahls von ca. 1570 °C (flüssig) auf eine mittlere Temperatur von ca. 1200 °C beim Auslauf aus der Stranggussanlage werden dem Stahl ca. 145 kWh/t Wärmeenergie entzogen. Diese Wärme geht z. Z. ungenutzt an die Umgebung (Luft und Kühlwasser) verloren.

In Warmbandanlagen wird nach dem Gießen die Restwärme der Brammen bisher so genutzt, dass die Brammen entweder direkt gewalzt oder warm bzw. heiß in den Ofen eingesetzt werden. Hierdurch lässt sich viel Heizenergie sparen. Voraussetzung für den Heiß- oder Direkteinsatz sind die örtliche Nähe von Stranggussanlage und Brammenofen. Dies ist bei älteren Anlagen jedoch nicht immer gegeben. Aus Gründen der Logistik, Oberflächenprüfung, Walzprogrammplanung etc. wird nur ein Teil der Produktion direkt bzw. heiß weiterverarbeitet. Entsprechend kühlen deshalb normalerweise die Brammen nach dem Gießen in einer mit Luft durchströmten Halle ab und werden vor ihrem Weitertransport aufgestapelt. Gleiches gilt für die in den Coils nach dem Wickeln vorhandene Restwärme, die oftmals im Coillager an der Luft abkühlen.

Die Restwärmenutzung durch die Umwandlung von Wärme in elektrische Energie oder Nutzung der Prozesswärme wird in Industriezweigen wie Metall-, Zement- oder Glasindustrie, die sehr energieintensiv sind, zunehmend durchgeführt. Auch im Bereich der Stahlerzeugung ist aus der WO 2008/075870 A1 bekannt, die bei der Herstellung von flüssigem Eisen durch Reduktion in einem Wirbelbettreaktor anfallende Abwärme zur Hochdruckdampferzeugung abzuführen, durch den dann beispielsweise eine Dampfturbine zur Stromerzeugung betrieben wird.

In der EP 0 044 957 B1 wird eine Anlage zur Rückführung der latenten und fühlbaren Wärme von Abgasen aus einem Kupolofen für die Gusseisenerzeugung oder einer ähnlichen Schmelzeinrichtung beschrieben, zum Zweck des Gewinnens von elektrischer und/oder thermischer Energie in Form von Dampf und/oder warmem Wasser. Die Anlage besteht aus einer Wärmeeinheit mit einem Brenner und zwei mit den Rauchgasen durchströmten Abhitzekesseln sowie bei der Erzeugung von elektrischer Energie zusätzlich einer mit Dampf aus einem Überhitzer gespeisten Turbine und einem Wechselstromgenerator.

Aus der DE 2622722 C3 ist eine Vorrichtung zur Abkühlung von heißen Stahlbrammen im Anschluss an den letzten Walzvorgang bekannt, in der die Stahlbrammen zwischen in parallelen Reihen angeordneten senkrechten Haltesäulen hochkant gestellt werden. Die von den Stahlbrammen abgestrahlte Wärme wird von zwischen den Haltesäulen angeordneten Kühlwänden mit Kühlwasserdurchströmten Rohrbündeln aufgenommen und zur Dampferzeugung genutzt.

Die EP 0 027 787 B1 beschreibt eine Anlage zur Gewinnung der fühlbaren Wärme von im Stranggießverfahren gegossenen Brammen in einer Kühlkammer mittels Luft, die mit einem Gebläse in direkten Kontakt mit den Brammenoberflächen gebracht wird. Die auf diese Weise erwärmte Luft dient dann außerhalb der Kühlkammer als Heizmedium, insbesondere für ein in einem thermodynamischen Kreisprozess geführtes Kreislaufmedium.

Ausgehend von diesem geschilderten Stand der Technik ist es Aufgabe der Erfindung, ein Verfahren und eine Anlage zur Energierückgewinnung der Kühlwärme der

Stranggießanlage sowie der in Warmbandstraße vorhandenen Restwärme von Brammen und Coils in Form von elektrischer Energie oder Nutzung der Prozesswärme bei anderen Wärmeverbrauchern anzugeben.

Die gestellte Aufgabe wird verfahrensmäßig mit den Merkmalen des Anspruchs 1 gelöst.

Eine Anlage zur Durchführung des Verfahrens ist im Anspruch 6 angegeben.

Erfindungsgemäße Ausgestaltungen sowohl des Verfahrens als auch der Anlage sind in den Unteransprüchen angegeben.

Durch Transportleitungen sind die Wärmetauscher miteinander in Reihe oder parallel und mit einer in der Nähe der Stranggussanlage, des Brammen- bzw. Coillagers angeordneten Stromerzeugungsanlage verbunden. Als Stromerzeugungsanlage wird eine ORC- oder Kalina-Anlage verwendet, in der mit einer durch Dampf angetriebenen Turbine mit angeflanschtem Generator die im Wärmeträgermedium gespeicherte Wärme mit Wärmetauscher übertragen und in elektrische Energie umgewandelt wird. Bei dem Arbeitsmedium der Stromerzeugungsanlage handelt es sich i. d. R. nicht um Wasser, sondern um Ammoniak-Wassergemische, Kohlendioxyd, Silikonöle, Kohlenwasserstoffe, Fluorkohlenwasserstoffe oder andere Medien, die bei niedrigeren Temperaturen und Druck verdampfen bzw. kondensieren, so dass ein geschlossener Kreisprozess auch bei niedrigen Temperaturen bzw. geringerer Energiezufuhr bei geringem Druck möglich ist. Die gängigen Temperaturbereiche für die beiden Stromgewinnungsverfahren liegen beim Kalina-Prozess bei ca. 95 °C bis 190 °C und beim ORC-Verfahren bei ca. 95 °C bis 400 °C (je nach Hersteller und Arbeitsmedium etwas unterschiedlich). Im Unterschied zu einem wasserbetriebenen Dampfturbinen-Kreisprozess ist beispielsweise die ORC-Anlage weniger aufwändig, er erfordert geringe Instandhaltungskosten, wird bei niedrigerem Druck betrieben und ist ausgezeichnet teillastfähig. Deshalb kommt eine ORC-Anlage bevorzugt zum Einsatz. Ist jedoch eine großtechnische Anlage mit hoher Energiemenge möglich und fallen ständig hohe Temperaturen an und es wird ein hoher Druck in der Stromerzeugungsanlage akzeptiert, so kann alternativ auch eine wasserbetriebene Dampfturbinenanlage zur Stromerzeugung zum Einsatz kommen.

Um den Wirkungsgrad der Stromerzeugungsanlage (z. B. ORC-Anlage) zu optimieren, ist diese mit einem, bevorzugt jedoch mit mehreren Wärmetauschern ausgerüstet. Für die unterschiedlichen Wärmetauscherkreise zu der Stromerzeugungsanlage (ORC-Anlage) werden deshalb verschiedene Zieltemperaturen angestrebt, die schrittweise gesteigert werden. Die Temperaturquellen mit niedrigerem Niveau dienen der Vorwärmung des Arbeitsmediums in der Stromerzeugungsanlage. Hierfür wird in der Stranggussanlage beispielsweise der Segmentrollen-Wärmetauscher genutzt. Im Coil- und Brammenlager stehen dafür die Wärmetauschereinheiten mit niedrigerer Coil- oder Brammentemperatur zur Verfügung. Durch Einsatz von Schaltventilen wird das Wärmeträgermedium hier auf den entsprechenden Wärmetauscher der Stromerzeugungsanlage geleitet. Am Verdampfer-Wärmetauscher wird die höchste Temperatur des Wärmeträgermediums erwartet. Hier wird das Arbeitsmedium der Stromerzeugungsanlage von einer Zwischentemperatur auf Verdampfungstemperaturniveau erhöht. Dies geschieht durch entsprechend hohe Vorlauftemperaturen des Wärmetransportmediums. Hierzu verwendet man in der Stranggussanlage den Wärmetauscher zwischen den Segmentrollen und im Coil- und Brammenlager die mit erhöhter Coil- bzw. Brammentemperatur bzw. allgemein ausgedrückt Wärmetauschereinheiten hoher Wärmetransportmitteltemperatur.

Ein Prozessmodell überwacht und steuert den Abkühlprozess, wobei insbesondere ausgehend von einer gemessenen oder gerechneten Strang- bzw. Brammentemperatur die Abkühlung der Bramme abhängig von den Umgebungsbedingungen berechnet wird. Je länger die Bramme im Wärmetauscher verweilt, desto besser ist die energetische Ausnutzung. So verliert eine Einzelbramme hier beispielsweise 600 °C in 5 Stunden. Ist die Brammentonnage höher als der Durchsatz, der sich aus der Summe aller Wärmetauscherplätze ergibt, verkürzt ein Prozessmodell die Lagerzeit entsprechend.

Gleichzeitig kombiniert das Prozessmodell den Einsatz der Wärmetauscher in sinnvoller Weise mit dem Lager- und Transportsystem, um beispielsweise die

Brammen bzw. Coils geordnet im Lager abzustellen oder zu legen und bei Bedarf selektiv zur Weiterverarbeitung wieder herauszuholen.

Ein Rechenbeispiel macht deutlich, wie viel elektrische Energie durch die erfindungsgemäße Nutzung der Restwärme von Brammen mit Hilfe von Wärmetauscher erhalten werden kann:
- Ausgenutzter Temperaturbereich z. B. 950 °C bis 350 °C.
- Mit dem Wärmeinhalt bei 950 °C von ca. 176 KWh/t und bei 350 °C von ca. 49 KWh/t ergibt sich eine Änderung des Wärmeinhaltes von ca. 127 KWh/t.
- Der Wirkungsgrad bei der Umwandlung in elektrische Energie beträgt η = ca. 0,1 (niedriger Schätzwert).
- Daraus ergibt sich eine elektrische Energie von 12,7 KWh/t.
- Bei der Produktion einer konventionellen Anlage von beispielsweise 3 Mill. Tonnen pro Jahr kann bei obigen Randbedingungen schätzungsweise aus einem Brammenlager ein Ertrag von 38100000 KWh pro Jahr entnommen werden, wenn alle Brammen zur elektrischen Energiegewinnung mit obigen Randbedingungen herangezogen werden.

Liegen andere Wärmeverbraucher in der örtlichen Nähe, wie beispielsweise Beize- oder andere Bandweiterverarbeitungsanlagen, so kann ein Teil der gewonnenen Strang-, Brammen- oder Coilprozesswärme alternativ über eine Wärmetransportleitung zu diesen Wärmeverbrauchern transportiert werden. In effizienter Weise wird dann dort die elektrische Energie eingespart.

Analog lässt sich die Brammen- oder Coilprozesswärme für benachbarte Anlagen oder Prozesse (außerhalb der Metall verarbeitenden Anlage) wie beispielsweise
- Meerwasserentsalzungsanlagen
- Trocknungsprozesse
- Fernwärme-Gebäudeheizungen
etc. sinnvoll und vorteilhaft nutzen und den Gesamtwirkungsgrad der Prozesswärmerückgewinnung steigern. Hierbei kann die Prozesswärme direkt oder die Kondensator-Kühlwärme der Stromerzeugungsanlage eingesetzt werden. Abhängig vom gewünschten Temperaturniveau wird dabei als Wärmetransportmedium Thermoöl, Luft, Wasser oder Dampf verwendet.

Soll eine elektrische Versorgungssicherheit für die angeschlossenen Elektroverbraucher sichergestellt werden, so ist an der Stromerzeugungsanlage ein Wärmespeicher angeschlossen, der kurzzeitige Wärmeunterbrechungen überbrückt. Weiterhin ist vorgesehen, einen Thermoölerhitzer zu installieren, der als Standby-Zusatzheizung dient. Der Thermoölerhitzer kann mit Gas (besonders vorteilhaft Hochofengas, Konvertergas, Koksgas, oder Erdgas etc.) oder Öl betrieben werden und wird nur beim Ausbleiben der Strang-, Brammen- und Coilwärme aktiviert. Der Thermoölerhitzer und die Stromerzeugungsanlage sind ebenfalls miteinander verbunden, so dass beispielsweise Thermoöl als Wärmeträgermedium zwischen beiden Anlagen fließen kann und so der Wärmetransport erfolgt. Sollte beispielsweise Hochofengas übrig sein, so könnte das in einer Gesamtanlagen-Energiestrategie oder eigenständigen Strategie eingebunden werden.

Jede Stromzeugungsanlage der diskutierten Art besitzt einen Kondensator. Hier wird das Arbeitsmedium wieder verflüssigt. Die Kühlung erfolgt dort durch Anschluss von Wärmeverbrauchern oder durch Einsatz von zusätzlichen luftgekühlten Wärmetauschern oder eines Kühlturms. Besonders vorteilhaft ist es, wenn die Kühlung mit dem ohnehin vorhandenen Kühlturm der Metallverarbeitungsanlage (Stranggussanlage, Walzwerk) durchgeführt werden kann. Hierdurch werden Investitionskosten gespart und diese Kühleinrichtung mit genutzt.

Statt die Kühlwärme am Kondensator der Stromerzeugungsanlage (ORC-Anlage) an die Umgebung abzugeben, ist vorgesehen, diese Energie als Luftvorwärmung (oder Vorvorwärmung) für den Brammen- oder Dünnbrammenofen (z. T.) zu verwenden und dort so Heizenergie zu sparen. Hierzu verbindet ein Wärmetransportkreis die Stromerzeugungsanlage mit den Wärmetauschern im Luft- oder Sauerstoffansaugkanal des Brammenofens. Nur überschüssige Kondensatorenergie der Stromerzeugungsanlage wird dann z. B. an die Umgebung abgegeben.

Hinter der Stranggussanlage einer CSP-Anlage befindet sich ein Rollenherdofen. Hier entfällt das Brammenlager, sondern es wird die Bramme in einem Rollenherdofen weiter transportiert. Die Verluste im Rollenherdofen, die über die Ofenrollen abgeführt werden, sind relativ hoch. Hieraus ergibt sich ein anderer Anwendungsfall. Um die Verluste zu reduzieren, ist analog zu dem ausgeführten Beispiel eines Transportrollen-Wärmetauschers vorgesehen, die Ofenrollen nicht mit Wasser sondern mit Thermoöl zu kühlen und zusätzlich diese Verlustwärme zur Stromerzeugung zu verwenden. Thermoöl erlaubt es, mit höheren Temperaturen zu kühlen, ohne dass mit Dampferzeugung im Kühlkreis gerechnet werden muss. Die Ofenrollen insbesondere die Scheiben der Ofenrollen erreichen so eine höhere Temperatur und führen dadurch zu geringeren Wärmeverlusten. Die maximalen Thermoöltemperaturen werden dabei an die verwendeten Ofenrollenmaterialien angepasst. Zusätzlich zur normalen Nutzung der Abgastemperaturen hinter den Rekuperatoren zur Frischgasvorwärmung für den Brammenofen, werden im Abgaskanal auch noch weitere Wärmetauscher zur Energierückgewinnung eingebaut und diese ebenfalls mit der Stromerzeugungsanlage verbunden. Durch die vorteilhafte Kombination der Rollenkühlwärme und der Abgasenergie, die der Stromerzeugungsanlage über Wärmetauscher und Wärmetransportleitungen in bekannter Art zugeführt werden, kann wirtschaftlich auch für CSP-Anlagen eine Wärmerückgewinnung und Stromerzeugung mit lohnenden Wärmemengen durchgeführt und die Verluste dort reduziert werden.

Die beschriebene Technologie ist nicht nur auf konventionelle Warmbandanlagen oder CSP-Anlagen mit Dickbrammen oder Dünnbrammen beschränkt, sondern kann auch in gleicher Weise bei der Block-, Knüppel-, Träger- oder Rundstahlerzeugung etc. angewendet werden. Auch bei Nichteisenanlagen (Bandanlagen etc.) kann diese Technologie vorteilhaft sein.

Ein wesentlicher Aspekt der Erfindung besteht darin, dass bevorzugt ein Wärmeübertragungsmedium zum Einsatz kommt, das quasi drucklos die Wärmeenergie vom Wärmetauscher der Wärmequelle zu dem Wärmetauscher der Stromerzeugungsanlage oder zu anderen Wärmeverbrauchern überträgt. Dies wurde oben damit quantifiziert, dass bevorzugt vorgesehen ist, dass der Druck des Wärmeübertragungsmediums nur dem Pumpenförderdruck zur Überwindung der Strömungsverluste in den Wärmetauschern und Transportleitungen entspricht und/oder es wird ein flüssiges Medium eingesetzt, das vorzugsweise keinen Dampfdruck über 2 bar aufbaut. In Sonderfällen kann z. B. spezielles Thermoöl einen etwas höheren Dampfdruck aufbauen. Der Betriebsdruck ist jedoch wesentliche geringer als bei Wasser bzw. Dampf bei vergleichbarer Temperatur. Jedenfalls ist bevorzugt nicht vorgesehen, dass das Wärmeübertragungsmedium unter hohem Druck durch die Wärmetauscher und ein Leitungssystem gefördert wird. Dies ist auch unter Sicherheitsgesichtspunkten sehr vorteilhaft.

Das Wärmeübertragungsmedium kann dabei hohe Temperaturen aufweisen und so den Wirkungsgrad der Stromerzeugungsanlage steigern.

Als Wärmeübertragungsmedium kommt bevorzugt Thermoöl zum Einsatz.

Weitere Vorteile und Einzelheiten der Erfindung werden nachfolgend an in schematischen Zeichnungsfiguren dargestellten Ausführungsbeispielen näher erläutert.

Es zeigen:
- Fig. 1: ein Coillager in einer Draufsicht,
- Fig. 2: ein Brammenlager in einer Draufsicht,
- Fig. 3: drei Brammenspeicherplätze in einer Draufsicht,
- Fig. 4 einen: Brammenspeicherplatz mit einer absenkbaren Dämmhaube in einer geschnittenen Seitenansicht,
- Fig. 5 einen: Brammenspeicherplatz mit einem schwenkbaren oberen Wärmetauscher in einer geschnittenen Seitenansicht,
- Fig. 6a: eine Brammenwärmetauscheranordnung in einer Warmhaltegrube in einer Draufsicht,
- Fig. 6b: eine Brammenwärmetauscheranordnung in einer Warmhaltegrube in einer geschnittenen Seitenansicht,
- Fig.6c: eine Brammenwärmetauscheranordnung mit Wärmetauschringleitungen in einer Seitenansicht,
- Fig. 7a: ein Brammen-Hochregallager in einer geschnittenen Vorderansicht,
- Fig. 7b: ein Brammen-Hochregallager in einer geschnittenen Seitenansicht,
- Fig. 8a: ein Coil-Hochregallager in einer geschnittenen Vorderansicht,
- Fig. 8b: ein Coil-Hochregallager in einer geschnittenen Seitenansicht,
- Fig. 9a: ein Hochkant-Brammenlager in einer Draufsicht,
- Fig. 9b: ein Hochkant-Brammenlager in einer geschnittenen Vorderansicht,
- Fig. 10: ein thermisch isolierter Rollgang mit als Wärmetauscher ausgebildeten Transportrollen,
- Fig. 11a: ein Rollgang mit beidseitiger Anordnung von als Wärmetauscher ausgebildeten Rollen,
- Fig. 11b: ein Rollgang der Fig. 10a mit zwischen den Rollen angeordneten Wärmetauscherplatten,
- Fig. 12: Segmentrollen als Wärmetauscher,
- Fig. 13: Segmentrollen-Ausbildungsvarianten,
- Fig. 14, 15 15a und 15b: Wärmetauscher zwischen den Segmentrollen,
- Fig. 16: Einsatz mehrerer Wärmetauscherkreise mit verschiedenen Wärmequellen und teilweise die Stromerzeugungsanlage,
- Fig. 17: analog Fig. 16, jedoch mit Thermoöl-Nachheizung in einer Zulaufleitung zum Wärmetauscher der Stromerzeugungsanlage,
- Fig. 18: CSP-Rollenherdofen mit Rückgewinnung der Ofenrollenverluste,
- Fig. 19: ein Prozessmodell,
- Fig. 20a: ein Wärmetauscherrohr mit Turbulenzblechen in perspektivischer Ansicht, teilweise geschnitten dargestellt,
- Fig. 20b: ein Wärmetauscherrohr mit Turbulenzblech in der Vorderansicht,
- Fig. 20c: ein verdrehtes, speziell profiliertes Wärmetauscherrohr, in Achsrichtung betrachtet und geschnitten dargestellt,
- Fig. 21: ein Anlagenschema der Wärmetauscher-Stromerzeugungs-Anlage.

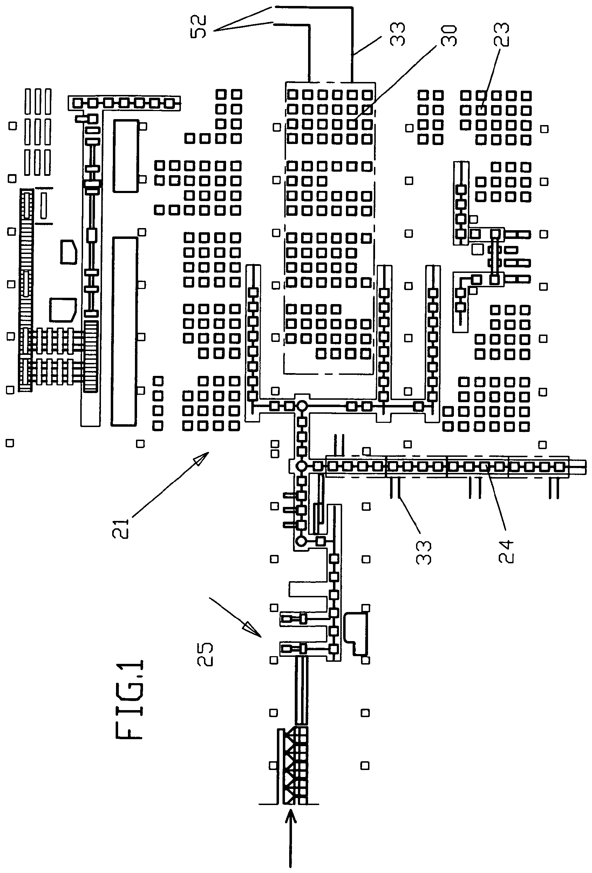

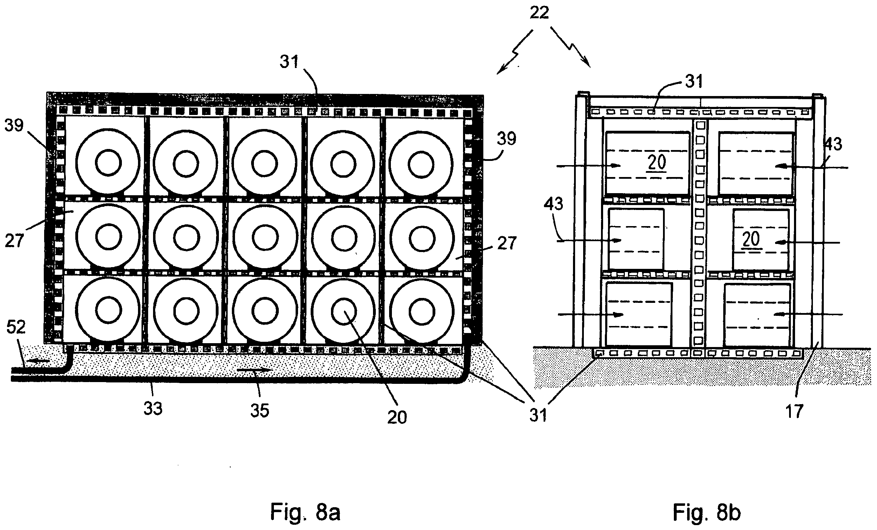

In der Figur 1 ist ein Coillager 21 in einer Draufsicht dargestellt. Die von einem Haspel 25 erzeugten Coils gelangen über eine Coil-Transportlinie 24, die beispielsweise mit Wärmetauscherhauben oder Wärmedämmhauben ausgebildet sein kann, zu ihren Lagerplätzen. Teilweise sind diese Lagerplätze erfindungsgemäß als Speicherplätze 30 mit Wärmetauschern 31 (s. Fig. 8a und 8b) ausgebildet, der übrige Rest sind übliche Coil-Lagerplätze 23 ohne Wärmetauscher. Je nach der noch vorhandenen Temperatur und dem Kühlfortschritt der Coils findet ein durch das Prozessmodell gesteuerter Austausch der Coils zwischen den Lagerplätzen 23 und den Speicherplätzen 30 statt. Das in den Speicherplätzen 30 aufgewärmte Wärmeträgermedium gelangt dann über Wärmeträger-Transportleitungen 33 und eine Wärmeträger-Sammelleitung 52 zur Stromerzeugungsanlage (die Stromerzeugungsanlage ist nicht dargestellt) oder kann an andere interne oder externe Wärmeverbraucher (z. B. Bandweiterverarbeitungsanlagen, Meerwasserentsalzungsanlage) weitergeleitet werden.

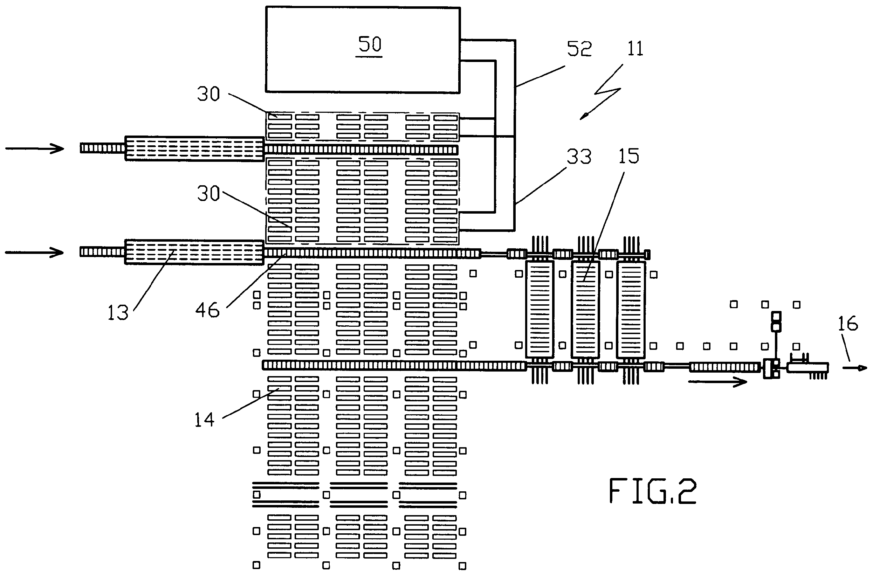

In der Figur 2 ist ein nach dem gleichen Prinzip wie das Coillager 21 der Fig. 1 ausgebildetes Brammenlager 11 in einer Draufsicht dargestellt. Von der Stranggussanlage werden die Brammen über wärmegedämmte oder als Wärmetauscher bzw. Wärmespeicher ausgebildete Zuführrollgänge 13 in das Brammenlager 11 transportiert. Im Brammenlager 11 sind ein Teil der Lagerplätze genau wie im Coillager 21 erfindungsgemäß als Speicherplätze 30 mit Wärmetauscher 31 ausgebildet, während die restlichen Lagerplätze 14 übliche Lagerplätze ohne Wärmetauscher sind. Je nach der noch vorhandenen Brammentemperatur und dem Kühlfortschritt findet auch hier durch das Prozessmodell ein gesteuerter Austausch der Brammen zwischen den Lagerplätzen 14 und den Speicherplätzen 30 statt. Das in den Speicherplätzen 30 aufgewärmte Wärmeträgermedium gelangt dann in gleicher Weise über Wärmeträger-Transportleitungen 33 und einer Wärmeträger-Sammelleitung 52 zur Stromerzeugungsanlage 50. Die auf den üblichen Lagerplätzen 14 und die auf den Speicherplätzen 30 abgekühlten Brammen werden dann zur weiteren Fertigung aus dem Brammenlager 11 über das Prozessmodell gesteuert abgezogen und über Wärmeöfen 15 in Transportrichtung 16 zur Walzstraße gefördert. Das Brammensortier- und Brammenplanungsmodell und das Prozessmodell zur Optimierung des Energieertrags sind miteinander gekoppelt.

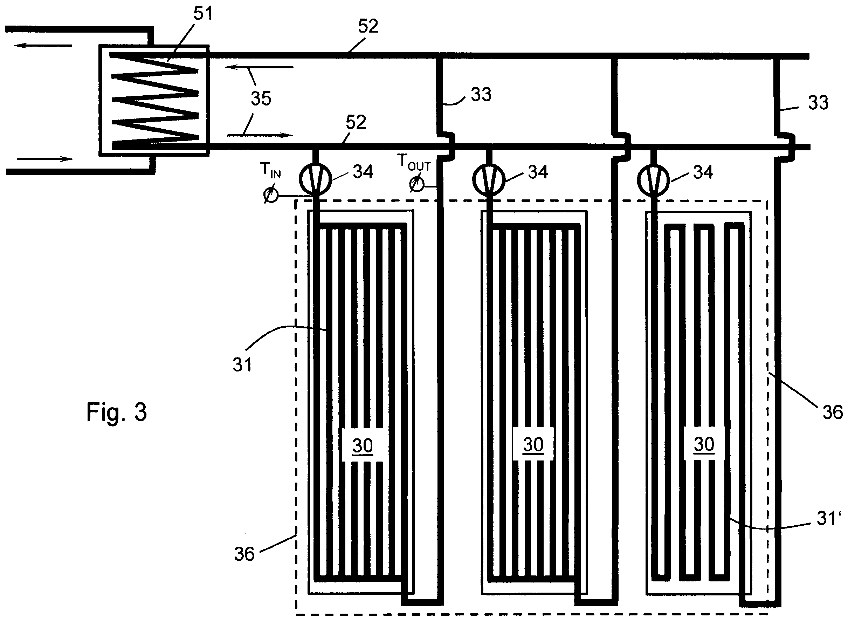

Der in der Fig. 2 gestrichelt dargestellte Lagerbereich mit Speicherplätzen 30 ist in der Figur 3 in einer Draufsicht beispielhaft vergrößert herausgestellt. In dieser Darstellung sind drei Speicherplätze 30 parallel nebeneinander angeordnet. Die drei Speicherplätze 30 sind gemeinsam oben mit einer schwenkbaren bzw. verschiebbaren Dämmhaube 36 (dargestellt ist nur die gestrichelte Umrisslinie 36) abgedeckt. Jeder Speicherplatz 30 enthält Wärmetauscher 31 bzw. 31', die sich oberhalb und unterhalb und ggf. neben der (hier nicht sichtbaren) eingelagerten Bramme befinden und die über Wärmeträger-Transportleitungen 33 mit einer Sammelleitung 52 verbunden sind. Eine Förderpumpe 34, die im Ausführungsbeispiel jedem Speicherplatz 30 zugeordnet ist, sorgt mittels einer kontinuierlichen Messung der Ein- und Austrittstemperatur des Wärmeträgermediums am Wärmetauscher 31 für eine durch das Prozessmodell festgelegte optimale Kühlung mit optimaler Nutzung der Restwärme und möglichst hoher Temperatur des Wärmetransportmediums durch individuelle Fördergeschwindigkeit des Wärmeträgermediums. Alternativ können auch mehrere Wärmetauscher 31 in Reihe geschaltet sein und von einer Förderpumpe 34 versorgt werden. Über die Sammelleitung 52 gelangt dann das erwärmte Wärmeträgermedium zum Vorwärmer bzw. Verdampfer 51 einer Stromerzeugungsanlage, beispielsweise einer ORC-Anlage.

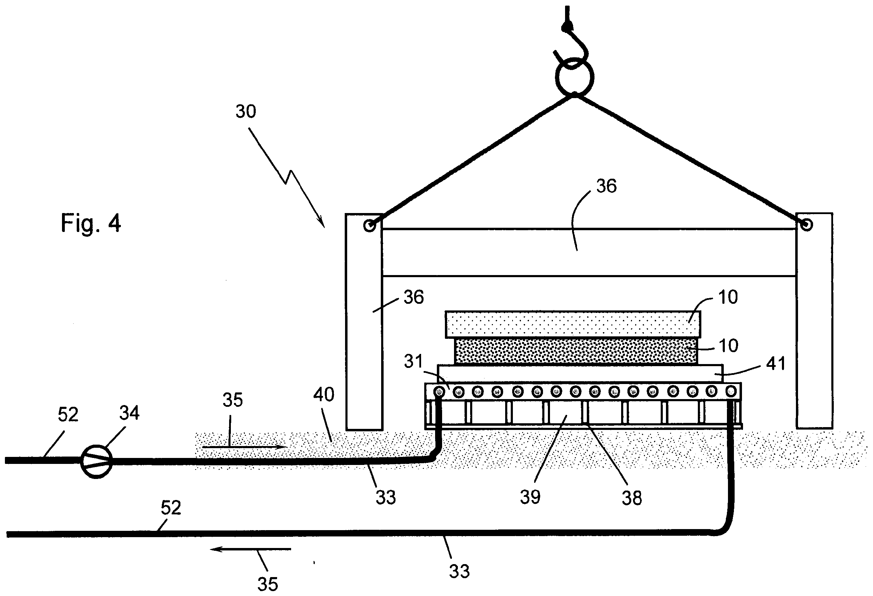

Ein Speicherplatz 30, der mit einer in der Fig. 3 gestrichelt angedeuteten Dämmhaube 36 ausgebildet ist, wird in der Figur 4 in einer geschnittenen Seitenansicht beispielhaft dargestellt. Die den Speicherplatz 30 oben abdeckende Dämmhaube 36 kann zum Brammenhandling beiseite geschwenkt oder mit einem Kran bewegt werden, wie in der Zeichnungsfigur schematisch dargestellt ist. Der Speicherplatz 30 ist mit einem auf Tragrippen 38 aufliegenden unteren Wärmetauscher 31 ausgebildet und auf einer Grundplatte 40 aus beispielsweise Beton angeordnet. Zwischen Wärmetauscher 31 und Bramme 10 befindet sich hier eine Tragschiene 41. Um Energieverluste weitgehend zu mindern, befindet sich unterhalb des Wärmetauschers 31 eine feststehende Wärmeisolierung 39 und innerhalb der Dämmhaube 36 eine hier nicht sichtbare Wärmedämmung. Da die Dämmhaube 36 in ihrer Höhe verstellbar ist, können auf diesem Speicherplatz 30 auch mehrere Brammen 10 aufeinander gestapelt werden. Der Wärmetauscher 31 ist über isolierte Wärmeträger-Transportleitungen 33 und eine Förderpumpe 34 mit einer wärmeisolierten Sammelleitung 52 verbunden, durch die das aufgeheizte Wärmeträgermedium in Transportrichtung 35 von und zu der (nicht eingezeichneten) Stromerzeugungsanlage gefördert wird.

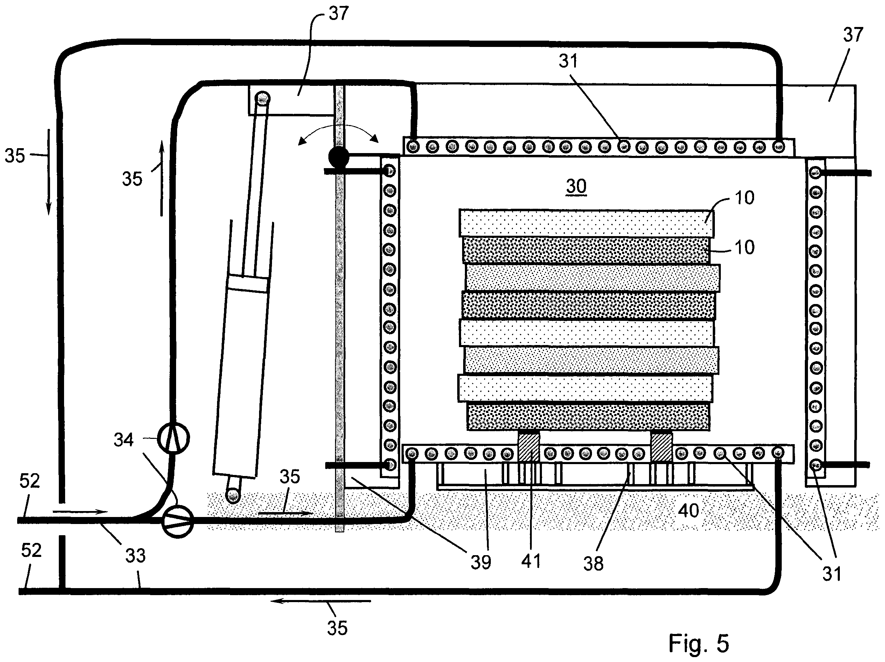

Die Figur 5 zeigt in einer geschnittenen Seitenansicht einen Speicherplatz 30, der auf der Oberseite mit einer zum Brammenhandling schwenkbaren oder verfahrbaren wärmeisolierte Haube 37 mit integriertem Wärmetauscher 31 abgedeckt ist. Neben einem am Boden angeordneten Wärmetauscher 31 sind zusätzlich an beiden Seiten oder an allen vier Seiten des Speicherplatzes 30 gleichfalls Wärmetauscher 31 angeordnet, so dass dieser Speicherplatz 30 vollständig von Wärmetauschern 31 umgeben ist. In gleicher Weise wie das Ausführungsbeispiel der Fig. 4 ist dieser Speicherplatz 30 auf Tragschienen 41 und Tragrippen 38 und feststehender Wärmeisolierung 39 auf einer Grundplatte 40 aus beispielsweise Beton angeordnet und seine Wärmetauscher 31 sind über isolierte Wärmeträger-Transportleitungen 33, eine Förderpumpe 34 und einer isolierten Sammelleitung 52 mit einer Stromerzeugungsanlage verbunden. Pro Speicherplatz 30 kann eine Bramme abgelegt werden oder um Speicherplätze zu sparen mehrere Brammen 10 wie dargestellt übereinander gestapelt werden. Es kann jeder Speicherplatz 30 mit einer eigenen Haube 37 versehen sein oder alternativ wird eine große Haube 37 eingesetzt, die mehrere nebeneinander liegende Speicherplätze 30 abdeckt, um Schwenkmechanismen wie beispielsweise Hydraulikzylinder zu sparen.

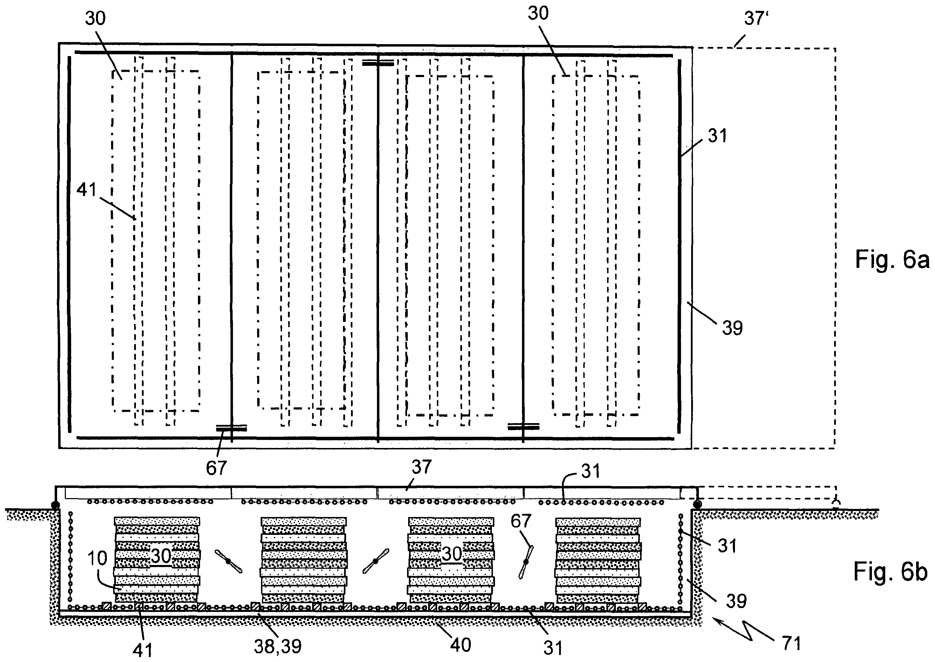

Ein typisches bevorzugtes Ausführungsbeispiel dieser Art für die Anordnung mehrerer Speicherplätze 30 nebeneinander ist in Form einer Warmhaltegrube auf Figur 6a in der Draufsicht und Figur 6b in der Seitenansicht dargestellt. In Warmhaltegruben werden für die eingelagerten Brammenstapel i. d. R. gezielt Abkühlgeschwindigkeiten eingestellt. Durch Einstellung unterschiedlicher Wärmetauscher-Zieltemperaturen bzw. Temperatur des Wärmetransportmediums der ausgewählten Wärmetauscherplätze kann dies erreicht werden. Diese Zieltemperaturen können über der Abkühlzeit gezielt verändert werden, um vorgegebene Abkühlkurven für die Brammen 10 dynamisch einstellen zu können. Die Brammen 10 liegen in Längsrichtung auf Tragschienen 41 auf. Durch verschiebbare Deckenplatten 37 können die Brammen hier einzeln entnommen werden. Alternativ sind die Deckenplatten 37 auch einzeln hochschwenkbar. Am Boden, an der Wand, optional auch an der Decke und gegebenenfalls zwischen den einzelnen Brammenstapeln (nicht dargestellt) sind Wärmetauscherrohre oder -platten 31 angeordnet (siehe Fig. 6b). Statt über erzwungene Konvektion die Energie an die Umgebung abzuleiten, wird sie gezielt an diese Wärmetauscher 31 abgegeben. Die Außenflächen der Grube sind thermisch durch eine Dämmplatte 39 isoliert. Nach unten erfolgt die Dämmung durch Tragrippen mit integrierten Dämmplatten 38, 39. Die Verbindungsleitungen zur Stromerzeugungsanlage sind nicht dargestellt.

Um den konvektiven Wärmeübergang abhängig vom Material, Brammenstapelhöhe und Temperaturniveau zu beeinflussen, wird hier mit temperaturbeständigen Ventilatoren 67 eine Luftströmung innerhalb der Grube erzeugt. Hiermit kann gleichzeitig die Abkühlgeschwindigkeit und Temperaturverteilung in der Grube beeinflusst werden. Soll der Wärmeübergang von den Brammen 10 zu den Wärmetauschern 31 reduziert werden, d. h. es ist bei z. B. bestimmten Brammenmaterialien eine extrem niedrigere Abkühlgeschwindigkeit erwünscht, so ist auch ein teilweises Zustellen bzw. Verkleiden der Wärmetauscher 31 durch z. B. nicht dargestellte Keramikplatten etc. definierter Stärke vorgesehen.

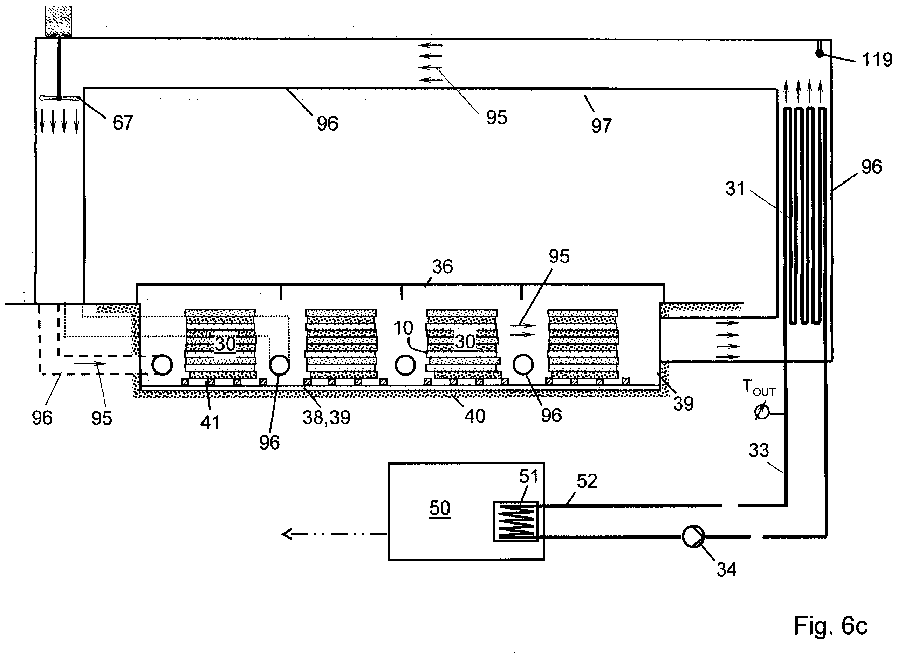

Statt Wärmetauscher um die Brammenstapel anzuordnen, können die Brammen 10 in einem isolierten Raum (z. B. in einer Warmhaltegrube) gelagert werden, durch den über eine Ringleitung 96 (Gastransportleitung, Wärmetauscherkanal) ein gasförmiges Medium (z. B. Luft) strömt, wie es in dem Ausführungsbeispiel gemäß Fig. 6c dargestellt ist. Hier wird mit Hilfe eines Gebläses 67 eine Zwangsströmung 95 (Gasstrom, Luftstrom) durch den Brammenspeicherraum über den Wärmetauscherkanal 96 bzw. mehrere kleine Rohrkanäle und zurück erzeugt. Alternativ kann auch für Sonderfälle die Abluft in einem Kamin mit Wärmetauscher 31 abgeleitet werden. Die Ringleitung vermeidet jedoch Abluft-Wärmeverluste. In der Ringleitung 96 gibt die Luft die Wärmeenergie an einen oder mehrere Wärmetauscher 31 ab. In einer separaten Wärmeträgertransportleitung 33, die z. B. mit Thermoöl gefüllt ist, wird der Wärmestrom u. U. mehrerer Wärmetauschereinheiten zunächst gesammelt (Sammelleitung 52) und dann an die Stromerzeugungsanlage (z. B. ORC-Anlage) 50 über den dortigen Wärmetauscher 51 abgegeben.

Der Brammenspeicherraum kann in Form einer Warmhaltegrube ausgebildet oder auf ebener Erde angeordnet sein. Es können - wie in Fig. 6c dargestellt - mehrere Brammenstapel 30 oder auch einzelne Brammenstapel 30 - im Sonderfall einzelne Brammen - in einem Raum angeordnet sein, durch den jeweils separat in einer Ringleitung ein gasförmiges Medium (z. B. Luft, Rauchgas, Stickstoff) durchgeblasen wird.

Um den konvektiven Wärmeübergang von der Bramme bzw. Brammenstapel an die Luft zu erhöhen, können Strahlungsbleche (nicht dargestellt) neben den Stapeln oder als Wandverkleidung montiert sein. Die Strahlungsbleche nehmen die Strahlungsenergie der Brammen auf, erwärmen sich und vergrößern die Wärmetauscherfläche für den konvektiven Wärmeübergang an das zirkulierende gasförmige Medium (z. B. Luft) und steigern so die Effizienz.

Besonders vorteilhaft, kann mit dem Gebläse 67 als Stellglied die Abkühlgeschwindigkeit der Brammen gesteuert werden. Weiterhin ist eine Anpassung der Gebläseleistung in Abhängigkeit der Brammentemperatur möglich. Zusätzlich kann die Temperatur des gasförmigen Mediums hinter dem Wärmetauscher 31 abhängig von den Bedingungen an der Stromerzeugungsanlage oder anderer Zielvorgaben eingestellt werden.

Es ist vorgesehen, eine analoge Verfahrensweise für Coils, Knüppel, Drahtstapel etc. in deren Lagern anzuwenden.

In Sonderfällen kann die Energie über den Gasstrom 95, statt an den Wärmetauscher 31, direkt an einen speziell dafür vorbereiteten Wärmetauscher 51 der Stromerzeugungsanlage (ORC-Anlage) 50 abgegeben werden.

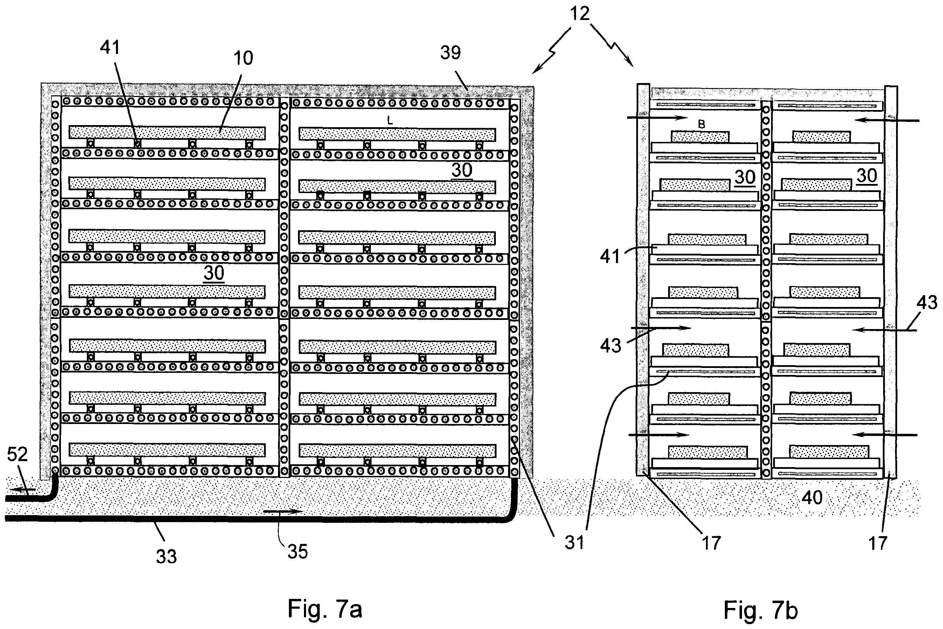

In den Figuren 7a und 7b sind in einer geschnitten Vorderansicht und einer geschnitten Seitenansicht ein Brammen-Hochregallager 12 dargestellt, in dem eine möglichst kompakte und kostengünstige Speicherung durchführbar ist. Die Brammen 10 werden flach seitlich in Füllrichtung 43 in die Speicherplätze 30 beispielsweise mit einem (nicht eingezeichneten) Stapler eingeschoben, wozu das Brammen-Hochregallager 12 mit abschnittsweise verfahrbaren seitlichen Türen 17 ausgebildet ist. Innerhalb des Brammen-Hochregallagers 12 liegen die Brammen 10 auf Tragschienen 41 auf. In den tragenden Wänden und Decken sind Wärmetauscher 31 integriert, damit sich die tragenden Teile nicht zu stark aufheizen und so die Standfestigkeit erhalten bleibt. Alle Wärmetauscher 31 sind über isolierte Wärmeträger-Transportleitungen 33 zum Teil parallel oder in Reihe miteinander und über eine Sammelleitung 52 mit einer Stromerzeugungsanlage verbunden.

In etwa gleicher Weise wie die Brammen 10 im Ausführungsbeispiel der Figuren 7a und 7b können auch Coils 20 zu ihrer Abkühlung in einem Hochregallager gelagert werden, wie in den Figuren 8a in einer geschnittenen Vorderansicht und 8b in einer geschnittenen Seitenansicht dargestellt ist. Das gezeigte Coil-Hochregallager 22 unterscheidet sich in konstruktiver Hinsicht nicht vom Brammen-Hochregallager 12, so dass die hier angeführten Bezugszeichen auf das Coil-Hochregallager 22 übertragbar sind. Für das Coil-Hochregallager 22 bestehen die Optionen, dass die dargestellten Coilfächer 27 aus Stabilitätsgründen auch seitlich gegeneinander versetzt angeordnet sein können und neben einer rechteckigen auch beispielsweise eine sechseckige Ausbildung der Coilfächer 27 möglich ist.

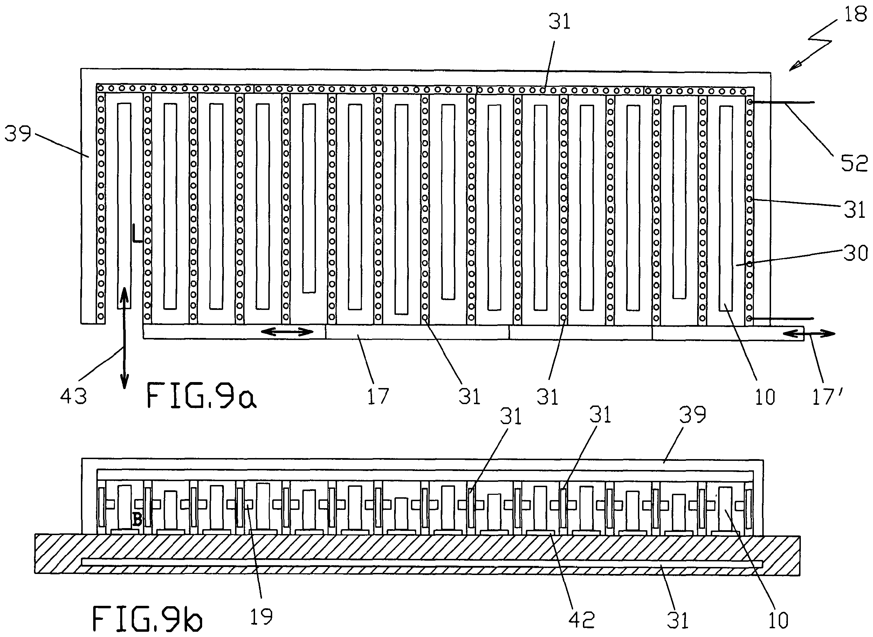

Eine alternative Möglichkeit der Brammenlagerung besteht darin, die Brammen 10 in Speicherplätze 30 eines Hochkant-Brammenlagers 18 zu lagern. In der Figur 9a ist ein derartiges Hochkantregal in einer Draufsicht und in der Figur 9b in einer geschnittenen Vorderansicht dargestellt. Zur Lagerung werden die Brammen 10 gekippt, auf ihre Breitseite gestellt und dann hochkant von der Seite in die Speicherplätze 30 des Hochkant-Brammenlagers 18 geschoben. Die Füllrichtung ist in der Figur 9a mit einem Pfeil 43 angegeben. Durch die größere Packungsdichte der Hochkantlagerung mit zwischen den Brammen 10 angeordneten Wärmetauschern 31 findet ein intensiver Wärmeübergang von den Brammen 10 auf das Wärmeträgermedium in den Wärmetauschern 31 bei geringen Verlusten statt. Um Energieverlusten zu begegnen, ist das gesamte Hochkant-Brammenlager 18 mit einer feststehenden Wärmeisolierung 39 ummantelt und abschnittweise eine verfahrbare wärmeisolierte Tür 17 vorhanden, die bei Bedarf in Transportrichtung 17' verschoben werden kann. Die hochkant gestellten Brammen 10 ruhen beispielsweise auf Rollen 42 oder anderweitig ausgebildeten Auflagen, durch die ein seitliches Ein- und Ausbringen der Brammen 10 in das Hochkant-Brammenlager 18 erleichtert wird. Zur seitlichen Führung und Kippsicherung der Brammen 10 sind an den Wärmetauschern 31 seitlich Abstützungen, beispielsweise auch hier Rollen 19 angeordnet, durch die gleichfalls eine leichtere Verschiebung des Ein- und Ausbringens der Brammen 10 ermöglicht wird. Die Rohrleitungen der Wärmetauscher 31 sind miteinander und über eine Sammelleitung 52 mit einer nicht dargestellten Stromerzeugungsanlage verbunden.

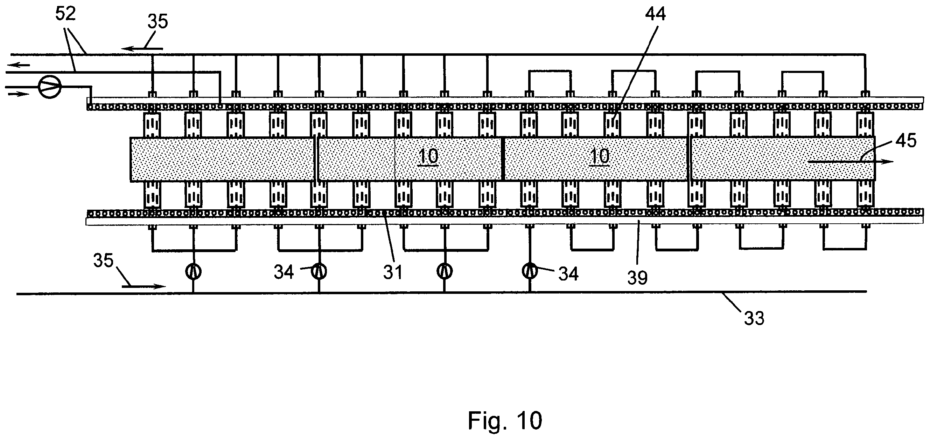

Um möglichst Wärmeverluste beim Transport der Brammen 10 zu vermeiden und/oder die Energie aufzufangen, werden, wie die Figur 10 in einer geschnittenen Draufsicht zeigt, die Transportrollen 44 als Wärmetauscher ausgebildet. Diese Rollenwärmetauscher können verschiedene Ausführungsformen z. B. 56, 57 oder 58 haben (auch als Segmentrolle mit z. B. Revolverkühlbohrung mit einseitiger Mediendrehzuführung für den Zu- und Abfluss). Im dargestellten Ausführungsbeispiel sind jeweils drei Transportrollen 44 über die isolierte Wärmeträger-Transportleitung 33 miteinander verbunden, wobei jeweils eine Förderpumpe 34 das aufgeheizte Wärmeträgermedium dieser drei Transportrollen 44 zur Sammelleitung 52 pumpt. Alternativ kann eine Förderpumpe 34 das Wärmeträgermedium durch mehrere Transportrollen mit wechselnder Durchströmungsrichtung hintereinander fördern, was Fig. 10 auf der rechten Seite zeigt. Seitlich an den Wänden, der Decke und am Boden der Transportrollen 44 befinden sich längere Wärmetauscher 31, die gleichfalls über eine separate Förderpumpe 34 mit den Sammelleitungen 52 verbunden sind. Durch diese längeren Wärmetauscher 31 sowie durch feststehende Wärmeisolierungen 39 ist der Rollgang so eingehaust, dass er praktisch die Funktion eines inversen Rollenherdofens aufweist, durch den auf Längen geschnittene Brammen 10 wie dargestellt oder "Endlosbrammen" transportiert werden.

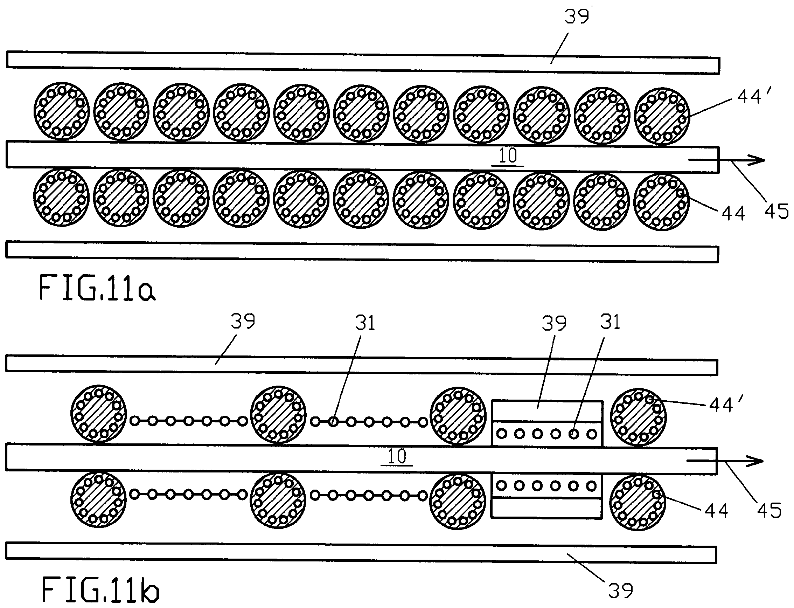

Zwecks weiterer Intensivierung des Wärmeübergangs von der Bramme zum Wärmetauschermedium werden während dem Transport der Bramme als Alternative in der Seitenansicht auf Figur 11a die beidseitige Anordnung von Wärmetauscher-Transportrollen 44 unten und reine Wärmetauscherrollen 44' oben dargestellt. Durch die Rollen 44 wird analog von Fig. 10 das Wärmetransportmedium gepumpt. Zusätzlich entsteht so eine sehr symmetrische Wärmeabfuhr durch beidseitigen Rollenkontakt, Strahlung und Konvektion. Der Spalt zwischen den Rollen 44 wird vorteilhafterweise minimiert. Die Rollen 44 können oben und z. T. auch unten bei Bedarf von der Bramme 10 weggeschwenkt werden, um den Wärmefluss von der Bramme 10 zu den Rollen abhängig vom Brammenwerkstoff zu verändern. Die Rollen 44 werden von einem wärmegedämmten Gehäuse 39 umgeben, das optional ebenfalls als Wärmetauscher 31 ausgebildet sein kann.

Als weitere Alternative zur Intensivierung des Wärmeübergangs dient die Wärmetauscheranordnung nach Figur 11b. Hier werden beidseitig größere Rollenabstände eingestellt. Zwischen den Rollen 44, 44' sind Wärmetauscher 31 angeordnet. Es können auch nur auf der Oberseite Wärmetauscher 31 angeordnet sein, die schwenkbar, verschiebbar oder feststehend ausgeführt sein können. Die Wärmetauscher 31 können beabstandet zur Bramme 10 angeordnet oder als Platte ausgebildet sein und mit leichtem Druck zwecks besserem Wärmeübergang gegen die sich bewegende Bramme 10 gepresst werden. Hinter den Rollen 44, 44' sowie der Rückseite der Wärmetauscher sind Wärmeisolierungen 39 angeordnet.

Bei längerer Bauform des Rollgangs mit kombinierten Wärmetauschern nach den Figuren 10 und 11 sind Lücken zwischen den Einheiten vorgesehen, damit die Brammen 10 aus logistischen Gründen bzw. zur Walzprogrammplanung etc. aus der Wärmetauscherlinie entnommen (abgeschoben, herausgehoben) werden können.

Eine weitere Möglichkeit, die bereits bei der Brammenerstarrung anfallenden Wärmemengen zu nutzen, besteht darin, die erfindungsgemäße Ausbildung von Transportrollen bereits in der Stranggießanlage anzuwenden und die unterhalb der Kokille zur Stützung und Förderung des Gießstrangs bzw. der Bramme verwendeten Segmentrollen als Wärmetauscher einzusetzen.

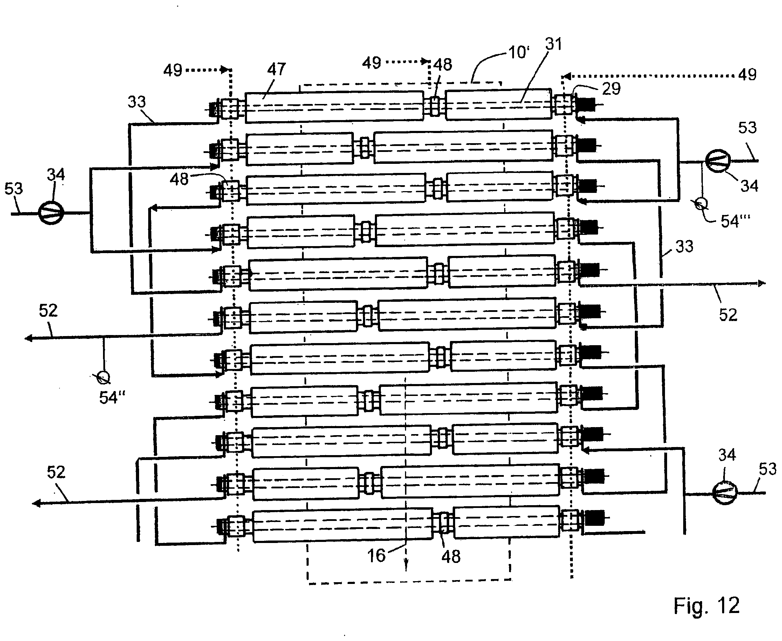

Figur 12 zeigt die schematische Darstellung der Segmentrollen 47, die als Wärmetauscher 31 ausgeführt sind sowie die Leitungen 52, 53 von und zur WärmeRückgewinnungsanlage und den Verbindungsrohrleitungen 33 über Mediendurchführungen 29 zu den Segmentrollenkühlungen 56, 57, 58. Im dargestellten Ausführungsbeispiel sind mehrere Förderpumpen 34 für verschiedene Segmentrollengruppen eingesetzt. Die Segmentrollen 47 werden hier z. B. mit Thermoöl durchströmt. Die Zuführung mit kälterem Thermoöl vom Rücklauf der Wärmerückgewinnungsanlage erfolgt üblicherweise im vorderen Stranggussanlagenbereich, wobei das Thermoöl im Wechsel von einer zur an deren Seite durch die Strangrollen gepumpt wird. Um dabei möglichst hohe Öltemperaturen zu erreichen, wird das Thermoöl im Wechsel mehrmals von links nach rechts und umgekehrt durch die Segmentrollen 47 geführt. Durch Wahl der Öltransportmenge einer Förderpumpe 34 kann die Thermoölaustrittstemperatur bzw. die Rücklauftemperatur 54" zur Wärmerückgewinnungsanlage beeinflusst werden. Die maximal zulässige Thermoöltemperatur liegt bei z. B. ca. 320 °C. Diese Zieltemperatur wird durch Festlegung der Anzahl der Wärmetauscher, die nacheinander durchlaufen werden, sowie durch die Thermoölfordermenge sichergestellt. Zur Überwachung der Thermoöltemperatur sind in der Vor- und Rücklaufleitung 52, 53 sowie teilweise zwischen den Segmentrollen 47 Temperaturmessgeräte angeordnet.

Die festen Verrohrungen oder Schlauchleitungen 33 zum flexiblen Verbinden der Segmentrollen 47 liegen weit außerhalb der Strangbereichs und sind thermisch abgeschirmt, genau wie auch gegen eventuelle Durchbrüche. Die Mediendrehdurchführungen 29 sind ebenfalls thermisch und gegenüber der Umgebungsluft abgeschirmt. In eventuell gefährdeten Bereichen sind zusätzlich Wassersprüheinrichtungen vorgesehen, um im Brandfall zu löschen und es sind Ölabschirmbleche angeordnet, damit bei einer Leckage das Öl nicht Richtung Strang läuft. Auch eine Leckage- bzw. Drucküberwachung ist vorgesehen.

Die äußeren Lager 48 werden durch eine separate Lagerkühlung 49 gekühlt. Eine Isolierschicht zwischen Lager und Wärmetauscherzapfen reduziert den Wärmverlust in diesem Bereich und schützt das Lager vor zu hoher Temperatur. Das mittlere Lager 48 kann hier auch als Lagerhalbschale ausgeführt sein, um die Schale nach außen abzustützen. Dieses Lager 48 besitzt gute Notlaufeigenschaften, sodass hier höhere Lagertemperaturen zugelassen werden.

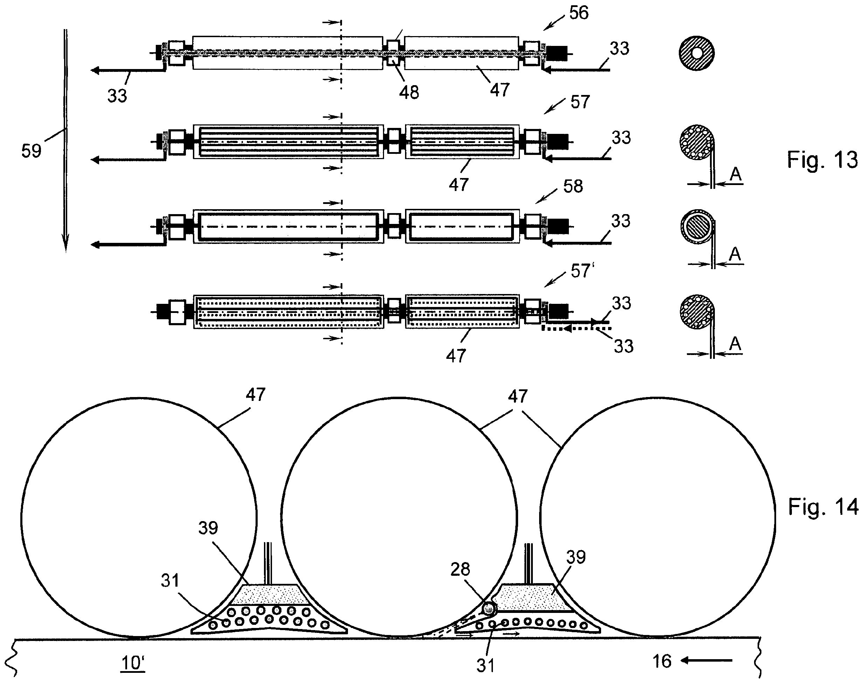

In der Figur 13 sind verschiedene mögliche Ausführungsformen bzw. Segmentrollenkühlungen in einer geschnittenen Seitenansicht und jeweils daneben in einem Querschnitt dargestellt. In Pfeilrichtung 59 mit zunehmender Energieabfuhr bzw. zunehmendem Wärmetauscherwirkungsgrad sind dies von oben nach unten eine Segmentrolle 47 mit zentraler Kühlbohrung 56, eine Segmentrolle 47 mit Revolverkühlbohrungen 57 und eine Segmentrolle mit Mantelkühlbohrungen 58.

Statt die Segmentrollen 56, 57, 58 von einer zur anderen Seite zu durchlaufen, sind auch Segmentrollen mit der kombinierten Zu- und Abfuhr der Wärmeträgerflüssigkeit nur auf einer Seite ausführbar (z. B. Segmentrollen mit Revolverkühlbohrungen mit einseitiger Mediendrehzuführung).

Die Segmentrollen 57 können auch so ausgeführt sein, dass die Rohrleitungen bei der Revolverkühlung nacheinander (hin und her) durchlaufen werden, bevor das Wärmetransportmedium die Rolle auf der Eintrittsseite oder gegenüberliegenden Seite wieder verlässt.

Der Abstand A der Segmentrollenkühlbohrungen der Revolverkühlung 57 oder bei der Mantel-Segmentrollenkühlung 58 sollte, zwecks Optimierung des Wärmeübergangs, möglichst minimal ausgeführt sein. Der Abstand beträgt A <40 mm zwischen der Segmentoberfläche und Kühlwand an der außen liegenden Seite.

Eine weitere vorteilhafte konstruktive Ausführungsform, die Wärme des Gießstrangs 10' aufzunehmen und zwecks Energierückgewinnung z. B. an eine Stromerzeugungsanlage weiterzuleiten, ist in der Figur 14 in einer geschnitten Seitenansicht dargestellt. Statt die Segmentrollen 47 als Wärmetauscher zu nutzen, sind hier Wärmetauscher 31 zwischen den Segmentrollen 47 angeordnet.

Die Wärmetauscherfläche zwischen den Segmentrollen kann ca. 50 - 60 % der Abstrahlfläche in der Stranggussanlage annehmen. Durch spezielle Anordnung der Wärmetauscher 31 sind die Segmentrollen 47 zum größten Teil gegenüber der Brammenwärme abgeschirmt, sodass sich hier eine geringere thermische Belastung der Segmentrollen ergibt. Die Wärmetauscher 31 können als Platte ausgeführt sein, in die ein- oder zweireihige Wärmetauscher-Röhrchen gebohrt sind. Die Rückseite des Wärmetauschers 31 (den Brammen abgewandte Seite) ist wärmegedämmt ausgeführt. Die Dämmkassette 39 besteht hier aus einer geschlossenen Blechummantelung mit einer Dämmstoffinnenfüllung. Der Dämmstoff ist gegenüber Wasser geschützt. Alternativ kann der Wärmetauscher offen aus nebeneinander angeordneten Rohren mit oder ohne Stege bestehen. Das dargestellte Strangsegment sollte möglichst, wie auf der linken Seite von Fig. 14 zu sehen ist, trocken gefahren werden. Hierdurch wird der maximale Wärmeertrag erzielt.

Sollte jedoch alternativ eine Strangaußenkühlung notwendig sein, so ist auch ein kombinierter oder alternativer Einsatz entsprechend dem in der Fig. 14 rechts eingezeichneten Beispiel möglich. Je nach Bedarf kann hier die vorhandene Sprühkühlung 28 aktiviert werden, wenn es aus metallurgischen Gründen zur Beeinflussung der Brammentemperatur oder aus Sicherheitsgründen notwendig ist.

Das Wasser wird bei dem Ausführungsbeispiel in den Spalt zwischen Segmentrolle 47 und Wärmetauscherplatte 31 gespritzt und läuft dann zwischen der Wärmetauscherplatte 31 und dem Gießstrang 10' entlang und kühlt so den Gießstrang 10'. Alternativ kann auch ein Schlitz in der Wärmetauscherplatte 31 angeordnet sein, durch den der Wasserstrahl auf den Gießstrang 10' gespritzt wird. Besteht der Wärmetauscher aus mehreren quer verlaufenden Rohren, so kann auch mit der Strangaußenkühlung an geeigneter Stelle durch den Spalt zwischen zweier Rohrleitungen hindurch gespritzt werden.

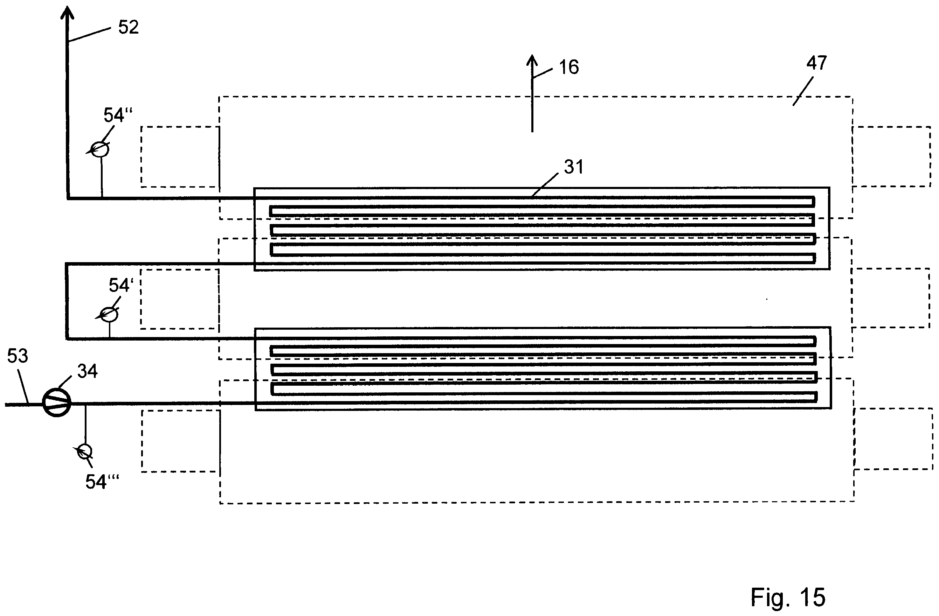

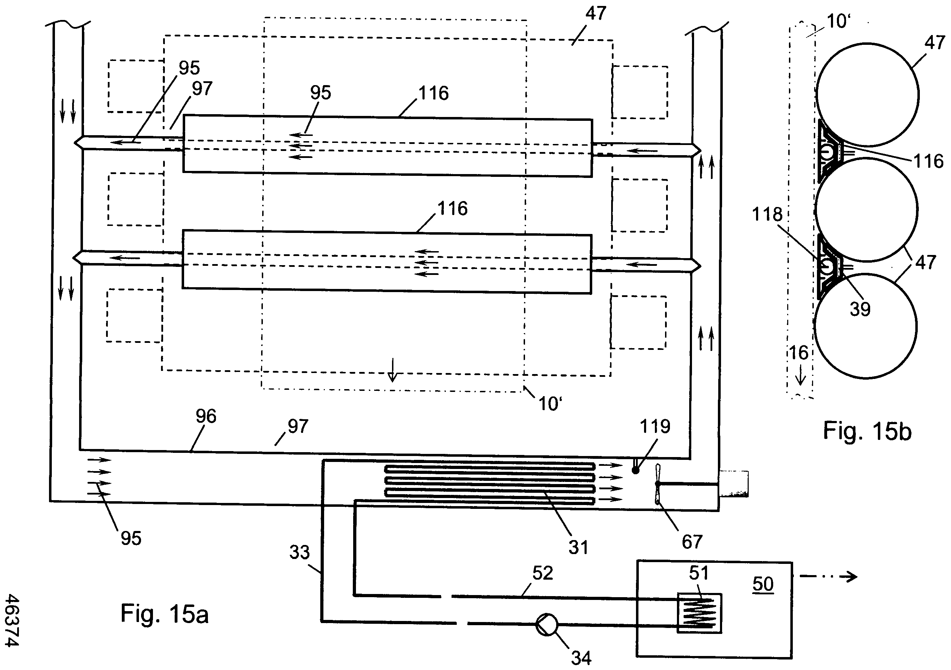

Die Figur 15 zeigt eine derartige Strangkühlung in der Draufsicht in Blickrichtung der Segmentrollen 47, die nur schematisch eingezeichnet sind. Die Breite des Wärmetauschers 31 ist etwas schmaler als die maximale Brammenbreite der Anlage. Die seitlichen Befestigungen der Wärmetauscher sind nicht dargestellt. Die Wärmeträger-Transportleitungen 33 sind schlangenförmig angeordnet. Alternativ können die Segmentrollen auch komplett von rechts nach links oder umgekehrt mit Wärmeträgerflüssigkeit durchströmt werden.

Mit einer Förderpumpe 34 wird die Wärmeträgerflüssigkeit durch den einen oder durch mehrere Wärmetauscher 31 hintereinander gefördert, bis sie an die Stromerzeugungsanlage zurückgeführt wird. Vorteilhafterweise wird die von der Stromerzeugeranlage kommende Leitung 53 an den Wärmetauscher 31 geführt, der der höchsten Wärmebelastung ausgesetzt ist. Die nicht dargestellten Segmentrollen-Stützrahmen können mit Innenkühlungen versehen werden.

Bei niedriger Stranggussanlagenproduktion (Gießgeschwindigkeit) oder bei bestimmten Materialien, die langsam gegossen werden müssen, kann das letzte Strangsegment statt als Strangführung als Wärmetauscher z. B. entsprechend Fig. 11a, 11b alternativ wechselbar ausgeführt sein.

Eine weitere alternative konstruktive Ausführungsform, um die Wärme des Gießstrangs 10' aufzunehmen, ist in Fig. 15a in der Vorderansicht und in Fig. 15b in der Seitenansicht dargestellt. Die Figuren zeigen einen kleinen Ausschnitt einer Stranggussanlagenhälfte, bestehend aus drei Segmentrollen 47, die nur gestrichelt angedeutet sind sowie den stichpunktiert angedeuteten Gießstrang 10'. Zwischen den Segmentrollen 47 sind hier Wärmetauscher 116 (Gaskanal) eingesetzt, durch die hier ein gasförmiges Medium 95 (z. B. Luft) geleitet wird. Die abgegebene Strahlungswärme des Gießstrangs 10' wird an die Wärmetauscherplatte des Gaskanals 116 abgegeben und von dem gasförmigen Medium 95 aufgenommen. Rippen 118 im Gaskanal 116 erhöhen den konvektiven Wärmeübergang. Die Rippen 118 können auch in Form von Turbulenzblechen ausgebildet sein. Die den Brammen abgewandte Seite des Wärmetauschers 116 ist wärmegedämmt ausgeführt. Diese Dämmkassette 39 vermindert die Wärmeverluste. Mit Hilfe eines oder mehrerer Gebläse 67 wird das gasförmige Medium 95 von den Wärmetauschern 116 über Gastransportleitungen 96 zu einem oder mehreren Wärmetauschern 31 außerhalb bzw. neben der Stranggussanlage befördert. Diese Gastransportleitungen 96 sind hier als Ringleitungen ausgebildet und mit Wärmeisolierungen 97 versehen.

Die Temperatur (gemessen mit einem Temperaturfühler 119) des gasförmigen Mediums beispielsweise hinter dem Wärmetauscher 31 wird abhängig der Bedingungen an der Stromerzeugungsanlage oder anderer Zielvorgaben eingestellt. Als Stellglied wird der Volumenstrom des Gebläses 67 verwendet.

Der Wärmetauscher 31 nimmt die Wärme des gasförmigen Mediums auf. Diese wird über eine Wärmetransportleitung 33 und eventuell über Sammelleitungen 52 mit einem flüssigen Wärmetransportmedium (z. B. Thermoöl) an eine Stromerzeugungsanlage 50 mit einer Pumpe 34 befördert, wo es die Wärme wiederum an dem Wärmetauscher 51 abgibt.

Die Stranggussanlage liefert Vorlauftemperaturen des Wärmeträgermediums mit unterschiedlichem Niveau. Die Segmentrollen 57 sind abhängig vom Rollenmaterial nur für niedrigere Rollentemperaturen zugelassen, um den Rollenverschleiß und Rollenfestigkeitswerte nicht negativ zu beeinflussen. Die Wärmetauscher zwischen den Rollen 31 haben keine tragende Funktion und sind für höhere Temperaturen geeignet.

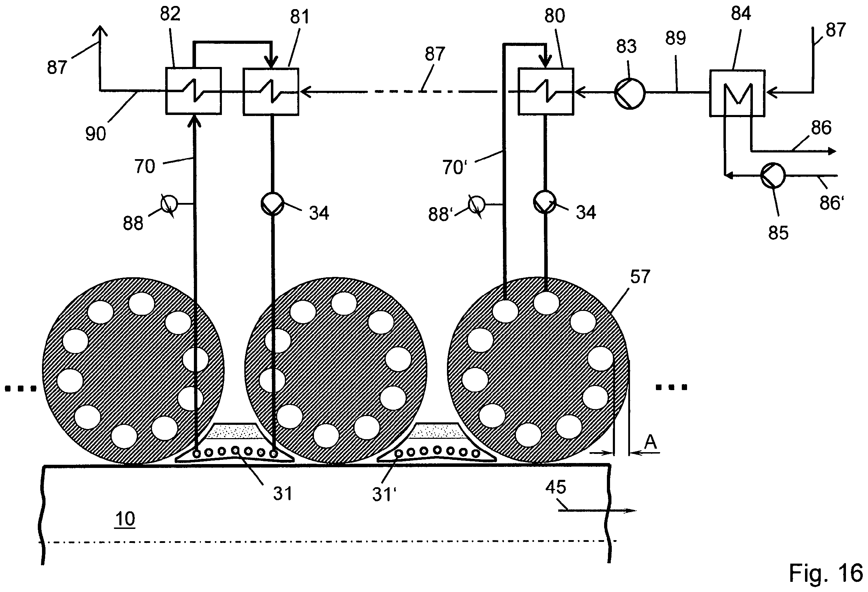

Um den Wirkungsgrad der Stromerzeugungsanlage (z. B. ORC-Anlage) zu optimieren, ist diese mit einem, bevorzugt jedoch mit mehreren Wärmetauschern ausgerüstet, was das Ausführungsbeispiel der Figur 16 zeigt. Hier ist oben ein Teil des Stromerzeuger-Anlagenkreises 87 dargestellt. Für die beiden dargestellten unterschiedlichen Wärmetauscherkreise 57-70'-80-34 und 31-70-82-81-34 von der Stranggussanlage zu der Stromerzeugeranlage werden verschiedene Zieltemperaturen 88, 88' angestrebt, die schrittweise gesteigert werden. Die Temperaturquellen (Wärmetransportmedium 70') mit niedrigerem Temperaturniveau 88' von z. B. 200 °C dienen hier der Vorwärmung des Arbeitsmediums (im Vorwärmer 80) in der Stromerzeugungsanlage. Hierfür wird in der Stranggussanlage der Segmentrollen-Wärmetauscher 57 genutzt. Am Verdampfer-Wärmetauscher 82 wird die höchste Temperatur 88 von z. B. 320 °C des Wärmeträgermediums 70 erwartet. Hier wird das Arbeitsmedium der Stromerzeugungsanlage im Arbeitskreis 87 von einer Zwischentemperatur auf Verdampfungstemperaturniveau erhöht und verdampft 90. Dies geschieht durch entsprechend hohe Vorlauftemperaturen 88 des Wärmetransportmediums 70. Hierzu verwendet man in der Stranggussanlage den Wärmetauscher zwischen den Segmentrollen 31. Angepasst an die verschiedenen Temperaturniveaus 88, 88' der beiden dargestellten Wärmetauscherkreise werden auch verschiedene Wärmetransportmedien 70, 70' eingesetzt. Vor der Erwärmung des Arbeitsmediums im Stromerzeugerkreis 87 wurden das Arbeitsmedium 89 im Kondensator 84 verflüssigt, so dass die Förderpumpe 83 das Arbeitsmedium transportieren kann. Die Kondensatorwärme wird über Wärmetransportleitungen 86, 86' mit Hilfe einer Pumpe 85 an nicht dargestellte Luftkühler, Kühlturm oder/und Wärmeverbraucher oder/und Verbrennungsluft-Vorwärmer abgegeben.

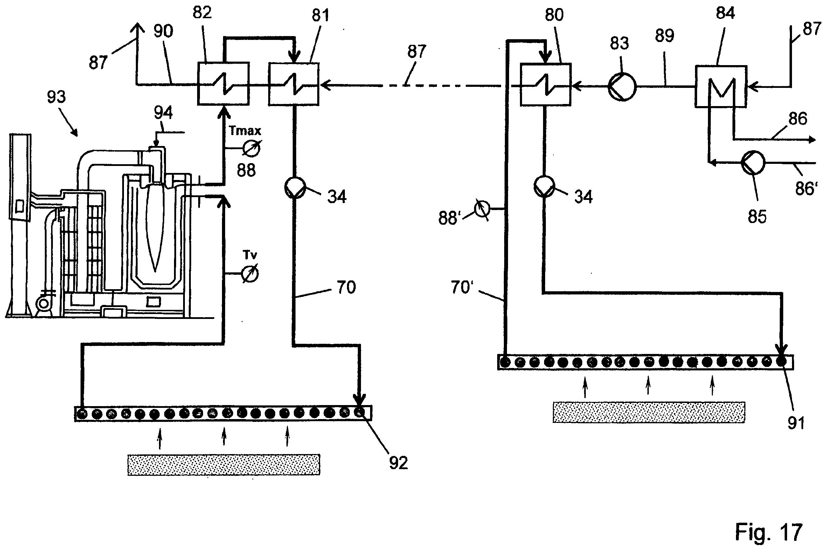

Alternativ kann der Thermoölstrom eines Wärmetauschers 92 in einer Thermoölheizung 93 entsprechend etwas nachgeheizt werden, bevor er zur Stromerzeugungsanlage (Wärmetauscher 82) gefördert wird, was Figur 17 zeigt. Bei der Thermoölheizung 93 handelt es sich um einen Ofen mit integriertem Wärmetauscher, mit dem mittels Flamme der Thermoölstrom erwärmt werden kann. Die Flamme wird mittels Öl, Erdgas oder bevorzugt Hochofengas, Koksgas oder Konvertergas 94 gespeist. Die Heizungsleistung der Thermoölheizung wird abhängig von der davor gemessenen Wärmeträgertemperatur Tv eingestellt und auf das gewünschte maximale Temperaturniveau Tmax angehoben. Alternativ ist es auch möglich den Heizkreis 70 (ohne Wärmetauscher 92) nur mit einer Thermoölheizung 93 zu speisen. Der Wärmetauscher 91 ist nur symbolisch als Plattenwärmetauscher Einheit ausgeführt. Die Ausführungen hierzu und den anderen Wärmetaucherkreisen können auch den Ausführungen nach Fig. 16 entsprechen.

Es können auch zusätzliche andere Wärmequellen aus der Walzanlage oder Stranggussanlage als Vorwärmer 80, 81 genutzt werden als die obig aufgeführten. Denkbar sind auch z. B. Dampfabsaugungen oder Abwärme von Rauchgasen, die ein Niveau von >100 °C haben.

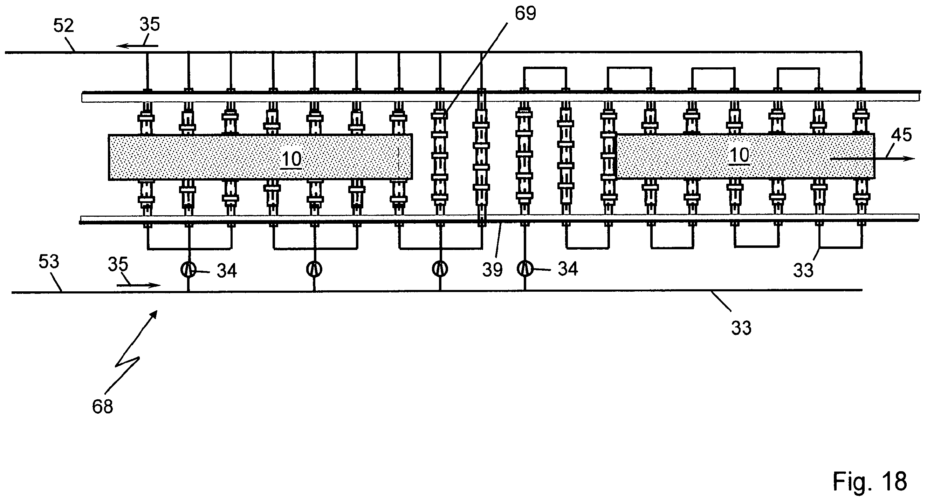

Hinter der Stranggussanlage einer CSP-Anlage befindet sich ein Rollenherdofen 68, wie er für einen kleinen Abschnitt auf Figur 18 dargestellt ist. Hier entfällt das Brammenlager, sondern es wird die Dünnbramme 10 in dem Rollenherdofen 68 etwas erwärmt und zur Walzstraße direkt weiter transportiert. Die Verluste im Rollenherdofen, die über die Ofenrollen 69 abgeführt werden, sind relativ hoch. Um diese zu reduzieren, ist analog zu dem ausgeführten Beispiel eines Transportrollen-Wärmetauschers in Fig. 10 und 11 vorgesehen, die Ofenrollen 69 nicht mit Wasser sondern mit Thermoöl zu kühlen und zusätzlich diese Verlustwärme zur Stromerzeugung zu verwenden. Thermoöl erlaubt es, mit höheren Temperaturen zu kühlen ohne das mit Dampferzeugung im Kühlkreis gerechnet werden muss. In Vergleich zu Fig. 10 sind hier nur Wärmetauscher in den Rollen 69 vorgesehen. Die Erläuterungen zu der Verrohrung sind der Beschreibung von Fig. 10 zu entnehmen. Die Ofenrollen 69 insbesondere die Scheiben der Ofenrollen erreichen so eine höhere Temperatur und führen dadurch zu geringeren Wärmeverlusten. Zusätzlich zur normalen Nutzung der Abgastemperaturen hinter den Rekuperatoren zur Frischgasvorwärmung für den Brammenofen, werden im Abgaskanal auch noch weitere Wärmetauscher zur Energierückgewinnung eingebaut und diese ebenfalls mit der Stromerzeugungsanlage verbunden. Dieser Wärmetauscherkreis ist in Fig. 18 nicht dargestellt. Durch die vorteilhafte Kombination der Rollenkühlwärme und der Abgasenergie, die der Stromerzeugungsanlage über Wärmetauscher und Wärmetransportleitungen in bekannter Art zugeführt werden, kann wirtschaftlich auch für CSP-Anlagen eine Wärmerückgewinnung und Stromerzeugung mit lohnenden Wärmemengen durchgeführt und die Verluste dort reduziert werden.

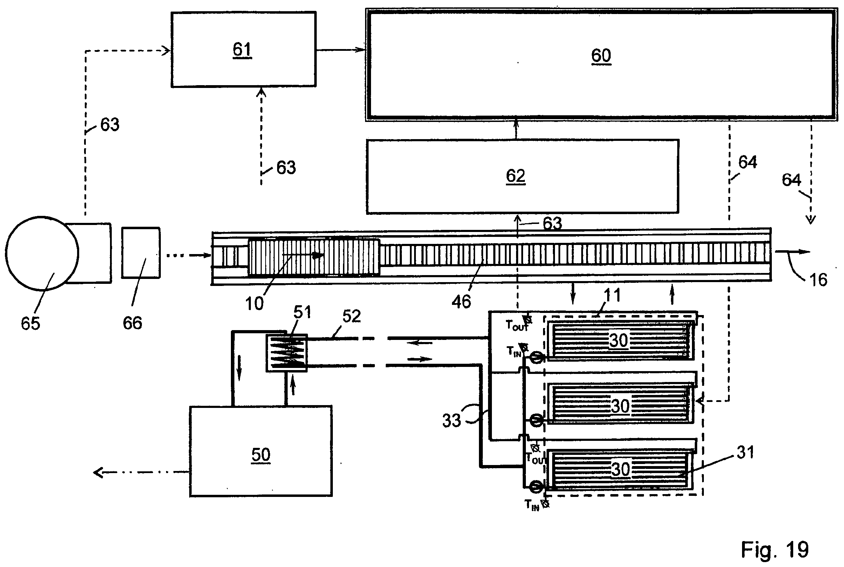

Ein Prozessmodell 60 zur Steuerung des gesamten Prozesses der Umwandlung der Restwärme innerhalb der Stranggussanlage und von Brammen bzw. Coils in elektrische Energie einschließlich des erforderlichen Brammenhandlings ist in der Figur 19 beispielhaft an der Abkühlung von Brammen dargestellt. Auf einem Rollgang 46 werden warme Brammen 10 von der Stranggussanlage 65 bzw. Brennschneidanlage 66 zum Brammenlager 11 transportiert und dort auf Speicherplätzen 30 mit Wärmetauschern 31 (entsprechend z. B. der Fig. 3) abgelegt. Nach durchgeführter Kühlung werden die abgekühlten Brammen 10 dann dem Brammenlager 11 entnommen und auf andere Brammenlagerplätze ohne Wärmetauscher gelegt oder in Transportrichtung 16 zur Walzstraße gefördert. Das in den Wärmetauschern 31 aufgeheizte Wärmeträgermedium wird über Wärmeträger-Transportleitungen 33 und eine Sammelleitung 52 zu einem Vorwärmer bzw. Verdampfer 51 der Stromerzeugungsanlage 50 geführt.

Über entsprechende Signalleitungen 63 werden dem Prozessmodell 60 die Brammen 10 (Brammen-Input 61) sowie die Speicherplätze 30 bzw. Wärmetauscher 31 (Speicherplatz-Input 62) betreffende Informationen zugeführt:
Brammen-Input Brammentonnage, Brammengeometrie, Brammentemperatur (gemessen, gerechnet), Gießgeschwindigkeit,
Speicherplatz-Inputgemessene Ein- und Auslauftemperatur des Wärmeträgermediums für jeden Speicherplatz bzw. Wärmetauscher. Ähnliches gilt auch, wenn die Wärmetauscher aus Wärmetauscherrollen bestehen.

Aus diesen Informationen werden im Prozessmodell 60 Verfahrensparameter berechnet und über entsprechende Steuerleitungen 64 zur Steuerung des Brammenhandlings verwendet. Im Einzelnen werden folgende Berechnungen durchgeführt:
- Berechnung der Brammentemperaturen und Kombination mit dem Brammensortier- und Lagersystem.
- Optimierung der Brammen-Austragetemperatur in Abhängigkeit der Speicherplätze.
- Errechnung der Temperatur der Brammen in den Speicherplätzen.
- Pumpenkapazität für jeden Wärmetauscher in Abhängigkeit von der Ein- und Auslauftemperatur des Wärmeträgermediums.
- Schalten und Regeln von Ventilen abhängig der Temperatur des Wärmeträgermediums und Zuordnung zu den Wärmetauschern der Stromerzeugungsanlage.
- Vorgabe der Zieltemperaturen für die verschiedenen Wärmetauscher bzw. Wärmetransportmedien.
- Berechnung des Gesamtwärmestroms (Temperatur, Massestrom) zur Stromerzeugungsanlage.
- Vorgabe der Gießgeschwindigkeit in der Stranggussanlage.
- Bestimmung des Austragezeitpunktes der Brammen aus den Speicherplätzen.

Die erfindungsgemäßen Wärmetauschereinheiten werden so ausgeführt, dass sie abschnittsweise leicht austauschbar sind, um deren Wartung und die Zugänglichkeit zu verbessern. Dies gilt bei Wärmetauschern in Hochregalbrammen- und - Coillagern, normalen Brammen- oder Collablageflächen sowie Wärmetauschern zwischen den Segmentrollen.

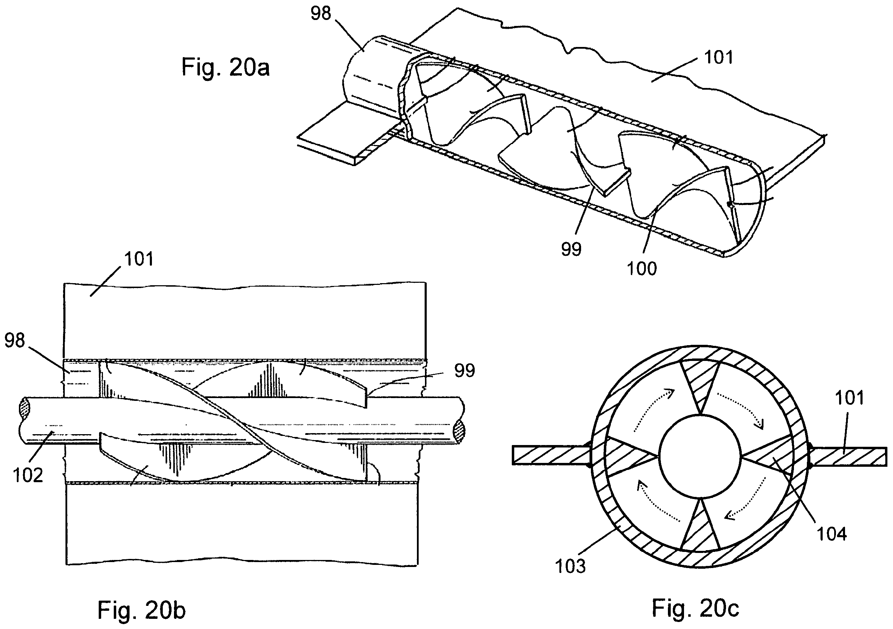

Um die Effizienz des Wärmeübergangs der Wärmetauscher zu steigern, können Turbulenzbleche (s. Fig. 20a, 20b, 20c) in die einzelnen Rohrleitungen des Wärmetauschers eingebaut werden. Hierdurch wird die Differenz zwischen der mittleren Wärmeträgertemperatur und maximalen Wärmeträgertemperatur (vornehmlich an der Rohroberfläche) vermindert. Weiterhin werden die Wärmeträgertemperaturen auf der Seite der Energiezufuhr und auf den der Wärmequellen abgewandten Seite näher gebracht. Dieser Effekt des besseren Durchmischens ist für diesen Anwendungsfall besonders vorteilhaft, weil höhere Auslauftemperaturen den Wärmetauschern der Stromerzeugungsanlage bereitgestellt werden können und/oder Überhitzungen des Wärmeträgermediums an der Oberfläche der Rohrinnenseite vermieden werden.

Wärmetauscherausschnitte mit Turbulenzblechen 98 in den Wärmetauscherleitungen mit angedeuteten Stegen 101 sind in den Figuren 20a, 20b, 20c dargestellt. In Fig. 20a ist ein Rohrausschnitt mit Turbulenzblechen 99, 100 mit alternierend unterschiedlicher Steigung zu sehen. Ein weiteres Ausführungsbeispiel mit Turbulenzblech 99 und Turbulenzblechhalter 102 in der Rohrmitte zeigt Fig. 20b. Die Turbulenzbleche sind so ausgestaltet, dass keine Totvolumen entstehen bzw. Staustellen vermieden werden. Die Turbulenzbleche 99 können an der Rohrwandoberfläche anliegen oder vornehmlich auf der Seite der Wärmequelle mit einem Abstand zur Wand angebracht sein. Eine andere Variante, die Effizienz zu steigern, ist die Verwendung von Wärmetauscherrohren 103 mit Innenstegen 104 entsprechend Fig. 20c. Durch die gute Verbindung des Steges zum Rohr vergrößert sich der Wärmeaustausch zusätzlich. Die Stege können in Längsrichtung des Rohres gerade oder spiralförmig ausgebildet sein, so dass das Wärmeträgermedium an der Rohrinnenseite unterschiedliche Temperaturniveaus (zur oder entgegen der Wärmequellenseite) durchläuft. Es sind 1 bis n Innenstege vorgesehen.

Die Wärmetauscherrohre mit Turbulenzblechen können gerade oder gekrümmt sein. Weitere Beispiele von Turbulenzblechanordnungen, z. B. in Mixern, sind den Druckschriften DE 2 262 016, DE 2 648 086, DE 695 04 892, EP 084 180 zu entnehmen.

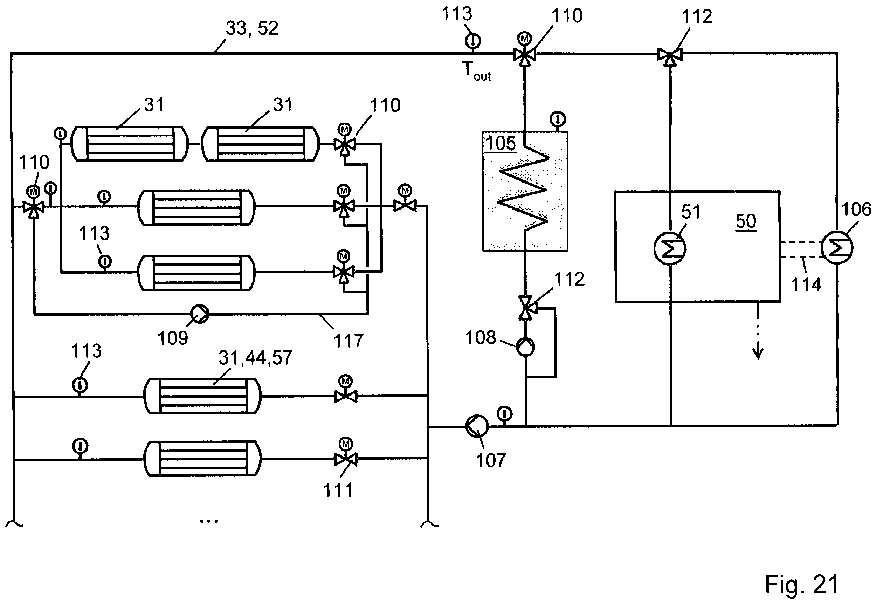

Ein typisches Ausführungsbeispiel für ein Anlagen-Rohrschema, das den Wärmetransport von der Wärmquelle (Wärmetauscher 31, 44, 57) der Metall verarbeitenden Anlage zur Stromerzeugungsanlage (z. B. ORC-Anlage 50) prinzipiell beschreibt, ist in Fig. 21 gezeigt. Der Haupt-Wärmetransportkreis besteht dabei aus Speisepumpe 107, Mischer 110, Regelventil 111, Wärmetauscher 31 und Wärmetauscher 51 der Stromerzeugungsanlage 50.

Um die Ziel-Eingangstemperaturen für die Stromerzeugungsanlage, d.h. vor dem Wärmetauscher 51, einstellen zu können, werden der Volumenstrom der Speisepumpe 107 und/oder die Mischer 110 bzw. das Regelventil 111 verwendet. Reicht das einmalige Durchlaufen eines Wärmetauschers nicht aus, um die Zieltemperaturen einzustellen, so ist eine Rückleitung 117 vorgesehen. Der Volumenstrom wird in dieser Rückleitung 117 von der Pumpe 109 und für jeden Wärmetauscher oder Wärmetauschergruppe vorgesehen Mischer 110 eingestellt. Bei dem Regelvorgang werden die Temperaturen des Wärmetransportmediums an verschiedenen Stellen des Rohrleitungssystems von Messgeräten 113 überwacht und die Stellglieder (Pumpen 107, 109 sowie Mischer 110, Ventile 111) von einem Prozessmodell gesteuert. Es ist auch vorgesehen, den Volumenstrom an verschiedenen Stellen zu messen und in die Regelung einzubeziehen.

Die Wärmetauscher sind zueinander parallel oder in Reihe geschaltet. Der Wärmetauscher mit der höchsten Umgebungstemperatur wird i. d. R. als letzter Wärmetauscher eingesetzt, bevor das Wärmeträgermedium über das Schaltventil 112 Richtung Stromerzeugungsanlage 50 transportiert wird.

Ist ein Wärmeüberangebot vorhanden, das über die Kapazität der Stromerzeugungsanlage 50 hinaus geht, oder hat die Stromerzeugungslage eine Störung, so ist optional vorgesehen, die überschüssige Wärme an den Wärmespeicher 105 abzugeben. Hierzu leitet ein Mischer 110 einen Teilstrom Richtung Wärmespeicher 105 um. Geben die Wärmetauscher 31 hingegen keine Wärme mehr ab, so kann die gespeicherte Wärme mit der Pumpe 108 aus dem Speicherbehälter 105 zum Wärmetauscher 51 der Stromerzeugungsanlage transportieren.

Der Wärmespeicher 105 ist in der Regel ortsfest. Er kann jedoch auch austauschbar für einen Transport der Wärme (z. B. per LKW) ausgeführt sein. Der Wärmespeicher kann aus mehreren Speichereinheiten in verschiedenen Ausführungsformen bestehen.

Fällt die Stromerzeugungsanlage aus, so ist vorgesehen, die Wärme an einem Notkühler 106 abzugeben. Der Durchlaufkreis wird dann durch das Schaltventil 112 entsprechend geändert. Dieser Notkühler 106 kann weiterhin optional als Kondensatorkühler der Stromerzeugungsanlage genutzt werden und ist über die Kühlrohre 114 damit verbunden.

Sicherheitsleitungen, Sicherheitsventile, Füll- und Entleerpumpen, Notpumpen, Reservepumpen, Ausdehngefäß, Inertgasanlage etc., die z. B. bei normalen Thermoölanlagen vorhanden sind, sind Bestandteil der Gesamtanlage, werden jedoch bei diesem vereinfachten Funktionsschema weggelassen.

### Bezugszeichenliste

- 10: Bramme
- 10': Gießstrang
- 11: Brammenlager
- 12: Brammen-Hochregallager
- 13: Zuführrollgang von der Stranggussanlage
- 14: Brammen-Lagerplätze ohne Wärmetauscher
- 15: Wärmeöfen
- 16: Transportrichtung von Strang, Brammen bzw. Coils
- 17: Verfahrbare Tür
- 17': Schieberichtung der verfahrbaren Tür
- 18: Hochkant-Brammenlager
- 19: Seitliche Führung / Abstützung / Rollen
- 20: Coil
- 21: Coillager
- 22: Coil-Hochregallager
- 23: Coil-Lagerplätze ohne Wärmetauscher
- 24: Coil-Transportlinie
- 25: Haspel
- 27: Coilfach
- 28: Sprühkühlung
- 29: Mediendurchführung
- 30: Speicherplatz
- 31: Wärmetauscher
- 31': Wärmetauscher mit alternativer Rohrleitungsanordnung
- 32: Wärmeträgermedium
- 33: Wärmeträger-Transportleitung
- 34: Förderpumpe
- 35: Transportrichtung des Wärmeträgermediums
- 36: Dämmhaube
- 37: Schwenkbare oder verschiebbare Haube mit integrierten Wärmetauscher und Wärmeisolierung / Deckenplatten
- 37': Ausweichposition der verschiebbaren Haube
- 38: Tragrippen / Tragbalken
- 39: Feststehende Wärmeisolierung bzw. Dämmkassette / Dämmplatte
- 40: Grundplatte
- 41: Tragschiene
- 42: Auflage / Rollen
- 43: Füllrichtung
- 44: Transportrollen als Wärmetauscher
- 44': Wärmetauscherrollen
- 45: Transportrichtung
- 46: Rollgang
- 47: Segmentrollen
- 48: Lager
- 49: Lagerkühlung
- 50: Stromerzeugungsanlage
- 51: Vorwärmer bzw. Verdampfer der Stromerzeugungsanlage
- 52: Sammelleitung des Wärmeträgermediums zur Stromerzeugungsanlage
- 53: Sammelleitung des Wärmeträgermediums von der Stromerzeugungsanlage
- 54': Wärmeträgertemperatur zwischen den Wärmetauschern
- 54": Wärmeträgerrücklauftemperatur
- 54'": Wärmeträgervorlauftemperatur
- 56: Segmentrolle mit zentraler Kühlbohrung
- 57: Segmentrolle mit Revolverkühlbohrungen
- 58: Segmentrolle mit Mantelkühlbohrungen
- 59: Richtung zunehmender Energieabfuhr bzw. Wirkungsgrad
- 60: Prozessmodell
- 61: Brammen-Input
- 62: Speicherplatz-Input
- 63: Signalleitungen
- 64: Steuerleitungen
- 65: Stranggussanlage
- 66: Brennschneidanlage
- 67: Ventilator, Gebläse
- 68: Rollenherdofen
- 69: Ofenrollen
- 70: Wärmetransportleitung mit Wärmetransportmedium A
- 70': Wärmetransportleitung mit Wärmetransportmedium B
- 71: Warmhaltegrube
- 80: 1. Wärmetauscher (Vorwärmer) der Stromerzeugungsanlage
- 81: n. Wärmetauscher (Vorwärmer) der Stromerzeugungsanlage
- 82: Verdampfer der Stromerzeugungsanlage
- 83: Förderpumpe für das Arbeitsmedium innerhalb der Stromerzeugungsanlage
- 84: Kondensator der Stromerzeugungsanlage
- 85: Förderpumpe der Kondensatorkühlung
- 86: Wärmetransportleitung zum Luftkühler, Kühlturm, Vorwärmer
- 86': Wärmetransportleitung vom Luftkühler, Kühlturm, Vorwärmer
- 87: Geschlossener Stromerzeugeranlagenkreis (Ausschnitt)
- 88: Wärmetransportleitung mit Zieltemperatur 1
- 88': Wärmetransportleitung mit Zieltemperatur 2
- 89: Arbeitsmedium der Stromerzeugungsanlage flüssig
- 90: Arbeitsmedium der Stromerzeugungsanlage dampfförmig
- 91: Wärmetauschersystem 1
- 92: Wärmetauschersystem 2
- 93: Thermoölheizung
- 94: Brennstoffzufuhr (Öl, Hochofengas, Koksgas, Konvertergas, Erdgas)
- 95: Gasstrom, Luftstrom
- 96: Gastransportleitung, Wärmetauscherkanal
- 97: Wärmeisolierung der Gastransportleitung
- 98: Wärmetauscherrohr mit Turbulenzblechen
- 99: linksdrehendes Turbulenzblech
- 100: rechtsdrehendes Turbulenzblech
- 101: Wärmetauscherblech bzw. -steg zwischen den Nachbarrohrleitungen
- 102: Turbulenzblechhalter
- 103: Wärmetauscherrohr mit Innenstegen
- 104: Innensteg
- 105: Speicherbehälter
- 106: Notkühler, Bypass-Wärmetauscher
- 107: Hauptspeisepumpe
- 108: Pumpe des Speicherkreises
- 109: Pumpe in Rückleitung
- 110: Mischer
- 111: Regelventil
- 112: Schaltventil
- 113: Temperaturmessgerät
- 114: Verbindungsrohre zur Kondensatorkühlung der Stromerzeugungsanlage
- 116: Wärmetauscher-Gaskanal
- 117: Rückleitung
- 118: Rippe
- 119: Temperaturfühler

- Tmax: Maximal zulässige Temperatur des Thermoöls
- Tv: Thermoöl-Vorlauftemperatur vor der Thermoölheizung

## Patentansprüche

1. Verfahren zur Energierückgewinnung in Stranggießanlagen, Anlagen zur Block-, Knüppel-, Träger- oder Rundstahlerzeugung, Nichteisenerzeugungsanlagen und in Warmbandstraßen, insbesondere bei der Erzeugung und Verarbeitung von Brammen (10) zu Bändern bzw. Coils (20), wobei die bei der Abkühlung des Gießstrangs (10') sowie der Brammen (10) und/oder Coils freiwerdende Wärmeenergie aufgefangen und genutzt wird,
wobei der Strang (10') bzw. die Brammen (10) in Richtung Walzstraße oder in das Brammenlager (11, 12, 18) und danach ins Coillager (21, 22) transportiert werden; wobei dem Strang bzw. den Brammen während des Gießens in Wärmetauschern (57, 31, 31', 116) und/oder während dem Transport in Wärmetauschern (31, 44, 69) Wärme entzogen wird; und/oder
wobei der Strang bzw. die Brammen in dem Brammenlager bzw. dem Coillager teilweise übereinander auf mit Wärmetauschern (31) ausgebildeten oder verbundenen Speicherplätzen (30) für kurze Zeit oder mehrere Stunden bzw. Tage abgelegt werden,
wobei in diesem Transportzeitraum und/oder im Lagerzeitraum die Restwärme des Gießstrangs (10') und/oder der Brammen (10) über die Wärmetauscher (31, 31', 44, 44', 57, 69, 91, 92, 116) in ein Wärmeträgermedium (32) überführt wird und dieses aufgeheizt wird, wobei die Wärme dann über Wärmeträger-Transportleitungen (33, 52, 70) zur Stromerzeugung abgeführt wird; **dadurch gekennzeichnet,**
**dass** der Transport des Wärmeträgermediums (32) vom Wärmetauscher (31, 44, 57) zur Stromerzeugungsanlage (50) in den Wärmeträgertransportleitungen (33, 52, 70) nur bei Pumpenförderdruck erfolgt und dass als Wärmeträgermedium (32) flüssiges mineralisches oder synthetisches Thermoöl oder eine Salzschmelze eingesetzt wird, die keinen Dampfdruck von über 2 bar aufbauen, wobei als Stromerzeugungsanlage (50) eine ORC-Anlage oder eine Kalina-Anlage verwendet wird.

2. Verfahren nach Anspruch 1, **dadurch gekennzeichnet, dass** die Vor- und Rücklauftemperaturen des Wärmeträgermediums (32, Tᵢₙ, Tₒᵤₜ) an mehreren Stellen der Anlage gemessen werden und die Durchflussmenge so eingestellt bzw. geregelt wird, dass die maximal zulässige Temperatur des Wärmeträgermediums (32, Tₒᵤₜ, Tmax) nicht überschritten oder eine gewünschte Zieltemperatur (Tₒᵤₜ) eingestellt wird.

3. Verfahren nach einem der vorangegangenen Ansprüche, **dadurch gekennzeichnet, dass** zur Einstellung der erforderlichen Durchflussmenge für die einzelnen Wärmetauscher regelbare Förderpumpen oder/und Misch- und Regelventile eingesetzt werden.

4. Verfahren nach einem der vorangegangenen Ansprüche, **dadurch gekennzeichnet, dass** das Wärmeträgermedium zusätzlich über eine Rückleitung (117) durch die Wärmetauscher (31) fließt, um die Zieltemperatur des Wärmeträgermediums einzustellen.

5. Verfahren nach einem der vorangegangenen Ansprüche 1 bis 4, **dadurch gekennzeichnet, dass** Wärmetauscher zwischen Segmentrollen angeordnet sind, die von einem gasförmigen Medium, insbesondere von Luft, durchströmt werden, das die aufgenommene Strahlungswärme mittels mindestens eines Gebläses (67) in einer Gastransportleitung (96) zu insbesondere großflächigen Wärmetauschern (31) transportiert, die ihrerseits die Wärme aufnehmen und über eine Wärmetransportleitung (33, 52) mit dem flüssigen Wärmetransportmedium, insbesondere mit Thermoöl, die Wärme an den Wärmetauscher (51) der Stromerzeugungsanlage abgeben.

6. Anlage zur Energierückgewinnung, wobei die bei der Abkühlung der Brammen (10) bzw. des Coils freiwerdende Wärmeenergie aufgefangen und genutzt wird, insbesondere zur Durchführung des Verfahrens nach einem oder mehreren der vorhergehenden Ansprüche,
wobei die Anlage eine Stromerzeugungsanlage (50) aufweist und ausgebildet ist
- in Form einer mit Wärmetauschern (31, 116) ausgeführten Stranggiessanlage (65), Anlage zur Block-, Knüppel-, Träger-, Rundstahlerzeugung oder zur Nichteisenerzeugung oder Warmbandstraße zur Erzeugung und Verarbeitung von Brammen (10) zu Bändern bzw. Coils (20), wobei die Wärmetauscher ausgebildet sind zur Aufnahme der Erstarrungswärme und Abgabe an ein Wärmeträgermedium; und/oder
- in Form eines mit Wärmetauschern (31, 44) ausgerüsteten Transportrollgangs (13) oder einer Transportkette (24) für Gießstränge Brammen oder Coils zur Aufnahme der beim Transport abgegebenen Wärme und Abgabe an ein Wärmeträgermedium; und/oder
- in Form von in einem Brammenlager (11, 12, 18) bzw. Coillager (21, 22) angeordneten Speicherplätzen (30) zur Lagerung von Gießsträngen, Brammen (10) bzw. Coils (20) während ihrer Abkühlung von der Auslauftemperatur aus der Stranggussanlage auf ca. 250 °C für Brammen (10) und von der Coilwickeltemperatur auf ca. 250 °C für Coils (20), mit unterhalb und/oder oberhalb und/oder neben den Brammen (10) bzw. Coils (20) bzw. neben dem Brammen- oder Coillager angeordneten Wärmetauschern (31) zur Aufnahme der bei der Abkühlung von den Brammen (10) bzw. Coils (20) abgegebenen Restwärme und Abgabe dieser Restwärme an ein Wärmeträgermedium;
**dadurch gekennzeichnet,**
**dass** Mittel zum Transport des Wärmeträgermediums (32) vom Wärmetauscher (31, 44, 57) zu der Stromerzeugungsanlage (50) in den Wärmeträgertransportleitungen (33, 52, 70) nur bei Pumpenförderdruck vorhanden sind und dass das Wärmeträgermedium (32) flüssiges mineralisches oder synthetisches Thermoöl oder eine Salzschmelze ist, die keinen Dampfdruck von über 2 bar aufbauen, wobei die Stromerzeugungsanlage (50) eine ORC-Anlage oder eine Kalina-Anlage ist.

7. Anlage nach Anspruch 6, **dadurch gekennzeichnet, dass** die Brammenlager bzw. Coillager als Hochregallager (12, 22) ausgebildet sind.

8. Anlage nach Anspruch 6, **dadurch gekennzeichnet, dass** die Brammenlager als Hochkant-Brammenlager (18) zur Lagerung von hochkant gekippten Brammen (10) ausgebildet sind.

9. Anlage nach Anspruch 6, **dadurch gekennzeichnet, dass** die Brammenlager als Warmhaltegruben (71) zur Lagerung von einem oder mehreren Brammenstapeln ausgebildet sind.

10. Anlage nach einem der Ansprüche 6 bis 9, **dadurch gekennzeichnet, dass** die oberhalb der Brammen (10) bzw. Coils (20) in den Speicherplätzen (30) angeordneten Wärmetauscher (31) schwenkbar oder verfahrbar ausgebildet sind.

11. Anlage nach einem der Ansprüche 6 bis 10, **dadurch gekennzeichnet, dass** zur Sicherstellung eines optimalen oder kontinuierlichen Wärmeflusses ortsfeste oder austauschbare bzw. transportable Wärmespeicher (105) vorgesehen sind, die mit den Wärmetauschern (51) der Stromerzeugungsanlage verbunden sind und je nach Wärmeangebot Energie speichern oder abgeben.

## Claims

1. Method for energy recovery in continuous casting plants, plants for producing billets, blooms, girders or rod stock, non-ferrous production plants and in hot-strip rolling trains, particularly for the production and processing of slabs (10) to form strips or coils (20), wherein the thermal energy liberated at the time of cooling the cast strip (10') as well as the slabs (10) and/or coils is collected and used,
wherein the strip (10') or the slab (10) is transported in the direction of the rolling train or into the slab store (11, 12, 18) and thereafter into the coil store (21, 22); wherein heat is extracted from the strip or slab in heat exchangers (57, 31, 31', 116) during the casting and/or in heat exchangers (31, 44, 69) during the transport; and/or
wherein the strip or the slab is deposited for a short time or for several hours or days in the slab store or the coil store in part one above the other at storage locations (30) constructed or connected with heat exchangers (31),
wherein in this transport time period and/or in the storage time period the residual heat of the cast strip (10') and/or of the slab (10) is transferred by way of the heat exchanger (31, 31', 44, 44', 57, 69, 91, 92, 116) to a heat carrier medium (32) and this is heated up, wherein the heat is then conducted away by way of heat carrier transport lines (33, 52, 70) for power generation;
**characterised in that**
the transport of the heat carrier medium (32) from the heat exchanger (31, 44, 57) to the power generating plant (50) in the heat carrier transport lines (33, 52, 70) is carried out only at pump conveying pressure and that liquid mineral or synthetic thermo-oil or a molten salt bath, which does not build up vapour pressure above 2 bars, is used as heat carrier medium (32), wherein an ORC plant or a Kalina plant is used as power generating plant (50).

2. Method according to claim 1, **characterised in that** the forward-run and return-run temperatures of the heat carrier medium (32, Tᵢₙ, Tₒᵤₜ) are measured at several locations of the plant and the throughflow quantity is so set or regulated that the maximum permissible temperature of the heat carrier medium (32, Tₒᵤₜ, Tmax) is not exceeded or a desired target temperature (Tₒᵤₜ) is set.

3. Method according to one of the preceding claims **characterised in that** regulable conveying pumps and/or mixing and regulating valves are used for setting the required throughflow quantity for the individual heat exchangers.

4. Method according to any one of the preceding claims, **characterised in that** the heat carrier medium additionally flows by way of a return line (117) through the heat exchanger (31) in order to set the target temperature of the heat carrier medium.

5. Method according to any one of the preceding claims 1 to 4, **characterised in that** heat exchangers are arranged between segment rollers and are flowed through by a gaseous medium, particularly air, which transports the collected radiant heat by means of at least one blower (67) in a gas transport line (96) to, in particular, large-area heat exchangers (31), which in turn collect the heat and by way of a heat transport line (33, 52) deliver the heat by the liquid heat transport medium, particularly thermo-oil, to the heat exchanger (51) of the power generating plant.

6. Plant for energy recovery, wherein the thermal energy liberated during the cooling of the slab (10) or the coil is collected and used, particularly for carrying out the method according to one or more of the preceding claims, wherein the plant comprises a power generating plant (50) and is constructed
- in the form of a continuous casting plant (65), a plant for billet, bloom, girder or rod stock production or for non-ferrous production or a hot strip rolling train for producing and processing slabs (10) to form strips or coils (20), the plant or rolling train being realised with heat exchangers (31, 116), wherein the heat exchangers are constructed for collecting the heat from hardening and delivering it to a heat carrier medium; and/or
- in the form of a transport roller path (13) or a transport chain (24) for cast strips, slabs or coils, the roller path or transport chain being equipped with heat exchangers (31, 44), for collecting the heat delivered during transport and delivering it to the heat carrier medium; and/or
- in the form of storage locations (30), which are arranged in a slab store (11, 12, 18) or coil store (21, 22), for storage of cast strips, slabs (10) or coils (20) during cooling thereof from the exit temperature from the continuous casting plant to approximately 250° C for slabs (10) and from the coil winding temperature to approximately 250° C for coils (20), with heat exchangers (31), which are arranged below and/or above and/or near the slats (10) or coils (20) or near the slab or coil store, for collecting the residual heat delivered during cooling of the slabs (10) or coils (20) and delivering this residual heat to a heat carrier medium;
**characterised in that**
means for transport of the heat carrier medium (32) from the heat exchanger (31, 44, 57) to the power generating plant (50) in the heat carrier transport lines (33, 52, 70) only at pump conveying pressure are present and
the heat carrier medium (32) is liquid mineral or synthetic thermal-oil or a molten salt bath, which does not build up vapour pressure above 2 bars, wherein the power generating plant (50) is an ORC plant or a Kalina plant.

7. Plant according to claim 6, **characterised in that** the slab stores or coil stores are constructed as high-bay warehouses (12, 22).

8. Plant according to claim 6, **characterised in that** the slab stores are constructed as on-edge slab stores (18) for storage of slabs (10) tipped to be on edge.

9. Plant according to claim 6, **characterised in that** the slab stores are constructed as heat retention pits (71) for storage of one or more slab stacks.

10. Plant according to any one of claims 6 to 9, **characterised in that** the heat exchangers (31) arranged above the slabs (10) or coils (20) in the storage locations (30) are constructed to be pivotable or movable.

11. Plant according to any one of claims 6 to 10, **characterised in that** in order to ensure an optimum or continuous heat flow, fixed heat stores (105) or exchangeable or transportable heat stores (105) are provided, which stores are connected with the heat exchangers (51) of the power generating plant and store or deliver energy according to the respective heat offering.

## Revendications

1. Procédé pour la récupération d'énergie dans des installations de coulée continue, des installations pour la production de lingots, de billettes, de poutrelles ou d'acier rond, des installations de production de métaux non-ferreux et dans des trains du type à feuillards à chaud, en particulier lors de la production et du traitement de brames (10) pour obtenir des bandes, respectivement des bobines (20) ; dans lequel l'énergie thermique qui se dégage lors du refroidissement de la barre de coulée continue (10') ainsi que des brames (10) et/ou des bobines est récupérée et est exploitée ; dans lequel la barre (10') respectivement les brames (10) sont transportées dans la direction du train de laminage ou jusque dans le parc à brames (11, 12, 18) et ensuite jusque dans le parc à bobines (21, 22) ; dans lequel de la chaleur est soustraite de la barre, respectivement des brames au cours de la coulée dans des échangeurs de chaleur (57, 31, 31', 116) et/ou au cours du transport dans des échangeurs de chaleur (31, 44, 69) ; et/ou dans lequel la barre, respectivement les brames sont déposées pendant un bref moment ou pendant plusieurs heures, respectivement plusieurs jours dans le parc à brames, respectivement dans le parc à bobines, en partie les unes par-dessus les autres dans des emplacements de stockage (30) réalisés avec des échangeurs de chaleur (31) ou reliés à ces derniers ; dans lequel, au cours de ce laps de temps de transport et/ou au cours du laps de temps d'entreposage, la chaleur résiduelle de la barre de coulée continue (10') et/ou des brames (10) est transférée, via les échangeurs de chaleur (31, 31', 44, 44', 57, 69, 91, 92, 116) à un milieu faisant office de fluide caloporteur (32) et ce dernier est réchauffé ; dans lequel la chaleur est ensuite évacuée via des conduits de transport de fluide caloporteur (33, 52, 70) pour la production d'électricité ; **caractérisé en ce que** le transport du milieu faisant office de fluide caloporteur (32) depuis les échangeurs de chaleur (31, 44, 57) jusqu'à l'installation de production d'électricité (50) dans les conduits de transport de fluide caloporteur (33, 52, 70) a lieu uniquement sous la pression de refoulement de pompes ; et **en ce qu'**on met en oeuvre, à titre de milieu faisant office de fluide caloporteur (32), de l'huile thermique liquide minérale ou synthétique ou du sel fondu, qui ne développe aucune pression de vapeur supérieure à 2 bars ; dans lequel on utilise, à titre d'installation de production d'électricité (50), une installation de type ORC ou une installation de type Kalina.

2. Procédé selon la revendication 1, **caractérisé en ce qu'**on mesure la température de départ et la température de retour du milieu faisant office de fluide caloporteur (32, Tᵢₙ, Tₒᵤₜ) à plusieurs endroits de l'installation et on règle, respectivement on régule le débit d'une manière telle que l'on ne dépasse pas vers le haut la température maximale admise du milieu faisant office de fluide caloporteur (32, Tₒᵤₜ, Tmax) ou que l'on règle une température cible désirée (Tₒᵤₜ).

3. Procédé selon l'une quelconque des revendications précédentes, **caractérisé en ce que**, pour le réglage du débit requis pour les échangeurs de chaleur individuels, on met en oeuvre des pompes de refoulement réglables et/ou des soupapes de mélange et de réglage.

4. Procédé selon l'une quelconque des revendications précédentes, **caractérisé en ce que** le milieu faisant office de fluide caloporteur s'écoule en outre via un conduit de retour (117) à travers les échangeurs de chaleur (31) dans le but de régler la température cible du milieu faisant office de fluide caloporteur.

5. Procédé selon l'une quelconque des revendications précédentes 1 à 4, **caractérisé en ce que** des échangeurs de chaleur sont disposés entre des rouleaux segmentés qui sont traversés par un milieu gazeux, en particulier par de l'air, qui transporte la chaleur rayonnante récupérée au moyen d'au moins un ventilateur (67) dans un conduit (96) de transport pour les gaz en direction d'échangeurs de chaleur 31 en particulier du type à grande surface qui, pour leur part, absorbent la chaleur et distribuent la chaleur, via un conduit de transport de chaleur (33, 52) avec le milieu liquide faisant office de fluide caloporteur, en particulier avec de l'huile thermique, aux échangeurs de chaleur (51) de l'installation de production d'électricité.

6. Installation pour la récupération d'énergie, dans laquelle l'énergie thermique qui se dégage alors du refroidissement des brames (10), respectivement de la bobine est récupérée et est exploitée, en particulier pour la mise en oeuvre du procédé selon une ou plusieurs des revendications précédentes ; dans laquelle l'installation présente une installation de production d'électricité (50) et est réalisée :
- sous la forme d'une installation de coulée continue (65) réalisée avec des échangeurs de chaleur (31, 116), d'une installation pour la production de lingots, de billettes, de poutrelles ou d'acier rond, ou pour la production de métaux non-ferreux et dans un train du type à feuillards à chaud, pour la production et le traitement de brames (10) dans le but d'obtenir des bandes, respectivement des bobines (20) ; dans laquelle les échangeurs de chaleur sont réalisés pour absorber la chaleur de solidification et sa distribution à un milieu faisant office de fluide caloporteur ; et/ou
- sous la forme d'un rouleau transporteur (13) ou d'une chaîne transporteuse (24) équipé d'échangeurs de chaleur (31, 44), pour des barres de coulée continue, des brames ou des bobines à des fins d'absorption de la chaleur dégagée lors du transport et de sa distribution à un milieu faisant office de fluide caloporteur ; et/ou
- sous la forme d'emplacements de stockage (30) disposés dans un parc à brames (11, 12, 18), respectivement dans un parc à bobines (21, 22), pour l'entreposage de barres de coulée continue, de brames (10), respectivement de bobines (20) au cours de leur refroidissement depuis la température de sortie à partir de l'installation de coulée continue jusqu'à environ 250 °C pour des brames (10) et depuis la température d'enroulement de bobine jusqu'à environ 250 °C pour des bobines (20), comprenant des échangeurs de chaleur (31) en dessous et/ou au-dessus et/ou à côté des brames (10), respectivement des bobines (20), respectivement à côté des parcs à brames ou à bobines, pour la réception de la chaleur résiduelle qui se dégage lors du refroidissement des brames (10), respectivement des bobines (20) et pour la distribution de cette chaleur résiduelle à un milieu faisant office de fluide caloporteur ; **caractérisé en ce qu'**on prévoit des moyens pour le transport du milieu faisant office de fluide caloporteur (32) depuis les échangeurs de chaleur (31, 44, 57) jusqu'à l'installation de production d'électricité (50) dans les conduits de transport du fluide caloporteur (33, 52, 70) uniquement sous la pression de refoulement de pompes ; et **en ce que** le milieu faisant office de fluide caloporteur (32) représente de l'huile thermique liquide minérale ou synthétique ou du sel fondu, qui ne développe aucune pression de vapeur supérieure à 2 bars ; dans laquelle l'installation de production d'électricité 50 représente une installation de type ORC ou une installation de type Kalina.

7. Installation selon la revendication 6, **caractérisée en ce que** les parcs à brames, respectivement les parcs à bobines, sont réalisés sous la forme d'entrepôts (12, 22) du type à rayonnages en hauteur.

8. Installation selon la revendication 6, **caractérisée en ce que** les parcs à brames sont réalisés sous la forme de parcs à brames disposées sur chant (18) pour l'entreposage de brames (10) inclinées sur chant.

9. Installation selon la revendication 6, **caractérisée en ce que** les parcs à brames sont réalisés sous la forme de fosses (71) qui maintiennent la chaleur pour l'entreposage d'une ou de plusieurs piles de brames.

10. Installation selon l'une quelconque des revendications 6 à 9, **caractérisée en ce que** les échangeurs de chaleur (31) disposés au-dessus des brames (10), respectivement des bobines (20), dans les emplacements de stockage (30), sont réalisés de manière à pouvoir pivoter ou de manière à pouvoir se déplacer.

11. Installation selon l'une quelconque des revendications 6 à 10, **caractérisée en ce que**, pour garantir un flux de chaleur optimal ou continu, on prévoit des accumulateurs de chaleur (105) montés à demeure ou échangeables, respectivement transportables, qui sont reliés aux échangeurs de chaleur (51) de l'installation de production d'électricité et qui stockent ou distribuent respectivement de l'énergie en fonction de l'offre de chaleur.
